(19) Europäisches Patentamt
European Patent Office
Office européen des brevets

(11) **EP 4 030 351 A1**

(12) **EUROPEAN PATENT APPLICATION**

(43) Date of publication:
**20.07.2022 Bulletin 2022/29**

(21) Application number: **21152148.9**

(22) Date of filing: **18.01.2021**

(51) International Patent Classification (IPC):
**G06N 3/04** *(2006.01)*     **G06N 3/063** *(2006.01)*
**G06N 3/08** *(2006.01)*     **G06N 5/00** *(2006.01)*
**G06N 5/02** *(2006.01)*

(52) Cooperative Patent Classification (CPC):
**G06N 3/0635; G06N 3/0427; G06N 3/0472;
G06N 3/049; G06N 3/084; G06N 3/088;
G06N 5/003; G06N 5/022;** G05B 2219/25428;
G06N 3/0454; G06N 3/0481; G06N 7/005

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Dold, Dominik**
  **85716 Unterschleißheim (DE)**
• **Soler Garrido, Josep**
  **81547 München (DE)**

(54) **INDUSTRIAL DEVICE AND METHOD FOR BUILDING AND/OR PROCESSING A KNOWLEDGE GRAPH**

(57) Industrial device (ED) for building and/or processing a knowledge graph (KG), with at least one sensor (S) and/or at least one data source (DS) configured for providing raw data (RD), with an ETL component (ETLC), configured for converting the raw data (RD) into triple statements (T), using mapping rules (MR), with a triple store (ETS), storing the triple statements (T) as a dynamically changing knowledge graph (KG), with a learning component (LC), configured for processing the triple statements (T) in a learning mode, and for performing an inference (IF) in an inference mode, and with a control component (CC), configured for switching between different modes of operation of the learning component (LC).

## FIG 1

**Description**

Graph-based data analytics are playing an increasingly crucial role in industrial applications. A prominent example are knowledge graphs, based on graph-structured databases able to ingest and represent (with semantic information) knowledge from potentially multiple sources and domains. Knowledge graphs are rich data structures that enable a symbolic description of abstract concepts and how they relate to each other. The use of knowledge graphs makes it possible to integrate previously isolated data sources in a way that enables AI and data analytics applications to work on a unified, contextualized, semantically rich knowledge base, enabling more generic, interpretable, interoperable and accurate AI algorithms which perform their tasks (e.g. reasoning or inference) working with well-defined entities and relationships from the domain(s) of interest, e.g. industrial automation or building systems.

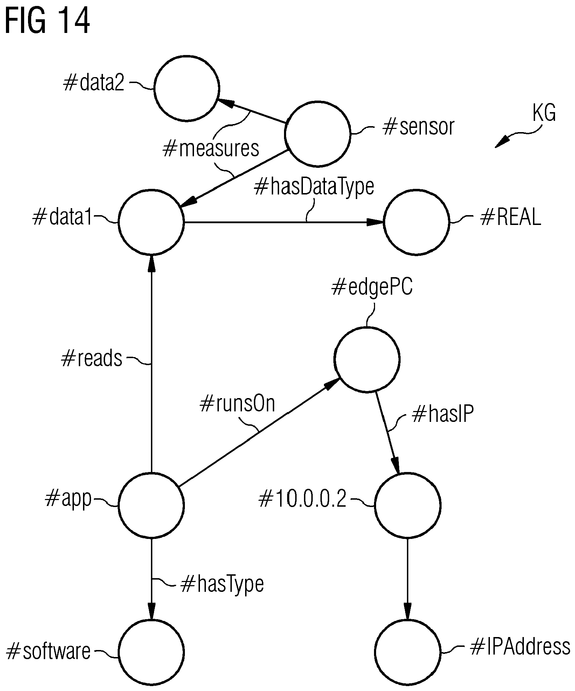

Fig. 14 shows a simplified example of an industrial knowledge graph KG describing parts of an industrial system. In general, a knowledge graph consists of nodes representing entities and edges representing relations between these entities. For instance, in an industrial system, the nodes could represent physical objects like sensors, industrial controllers like PLCs, robots, machine operators or owners, drives, manufactured objects, tools, elements of a bill of materials, or other hardware components, but also more abstract entities like attributes and configurations of said physical objects, production schedules and plans, skills of a machine or a robot, or sensor measurements. For example, an abstract entity could be an IP address, a data type or an application running on the industrial system, as shown in Fig. 14.

How these entities relate to each other is modeled with edges of different types between nodes. This way, the graph can be summarized using semantically meaningful statements, so-called triples or triple statements, that take the simple and human-readable shape 'subject - predicate - object', or in graph format, 'node - relation - node'.

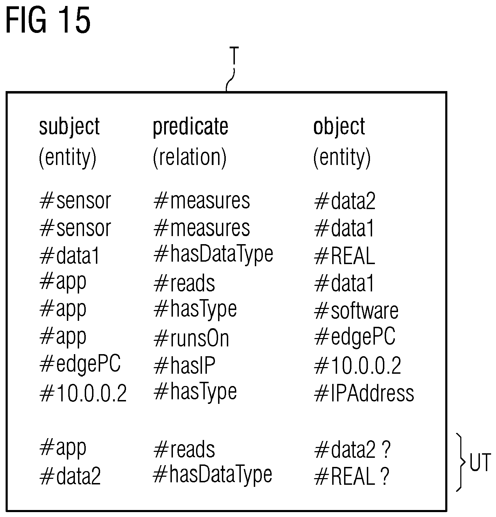

Fig. 15 shows a set of known triple statements T that summarizes the industrial knowledge graph KG shown in Fig. 14, including two unknown tripe statements UT that are currently not contained in the industrial knowledge graph KG. Inference on graph data is concerned with evaluating whether the unknown triple statements UT are valid or not given the structure of the knowledge graph KG.

Multi-relational graphs such as the industrial knowledge graph shown in Fig. 14 are rich data structures used to model a variety of systems and problems like industrial projects. It is therefore not surprising that the interest in machine learning algorithms capable of dealing with graph-structured data has increased lately. This broad applicability of graphs becomes apparent when summarizing them as lists of triple statements 'subject - predicate - object', or 'node - relation - node'. Complex relations between different entities and concepts can be modeled this way. For example, in case of movie databases, a graph might look like this: '#M.Hamill - #plays - #L.Skywalker', '#L.Skywalker -#appearsIn - #StarWars', '#A.Skywalker - #isFatherOf -#L.Skywalker' and '#A.Skywalker - #is - #DarthVader'. Inference on such graph-structured data is then akin to evaluating new triple statements that were previously unknown - or in the language of symbolic graphs: predicting new links between nodes in a given graph-like '#DarthVader - #isFatherOf - #L.Skywalker' and '#DarthVader - #appearsIn - #StarWars', but not '#A.Skywalker - #isFatherOf - #M.Hamill'.

Although multi-relational graphs are highly expressive, their symbolic nature prevents the direct usage of classical statistical methods for further processing and evaluation. Lately, graph embedding algorithms have been introduced to solve this problem by mapping nodes and edges to a vector space while conserving certain graph properties. For example, one might want to conserve a node's proximity, such that connected nodes or nodes with vastly overlapping neighborhoods are mapped to vectors that are close to each other. These vector representations can then be used in traditional machine learning approaches to make predictions about unseen statements, realizing abstract reasoning over a set of subjects, predicates and objects.

Existing systems able to train AI methods on knowledge-graph data require the extraction of large quantities of raw data (e.g. sensor data) from the source producing them. The extracted data is then mapped to a set of pre-defined vocabularies (e.g. ontologies) in order to produce so-called triples, statements about semantic data in the form of subject-predicate-object, represented in a machine-readable format such as RDF. A collection of such triples constitutes a knowledge graph, to which a wide range of existing algorithms can be applied to perform data analytics.
An example are methods that learn representations (so-called embeddings) for entities in the graph in order to perform an inference task such as performing knowledge graph completion by inferring / predicting unobserved relationships (link prediction) or finding multiple instances of the same entity (entity resolution).

These methods are based on intensive stochastic optimization algorithms that due to their computational complexity are best suitable for offline learning with previously acquired and stored data. Only after an algorithm (e.g. a neural-network for link prediction) has been trained with the extracted data on a dedicated server, it is possible to perform predictions on new data, either by further extracting data from the relevant devices producing them, or by deploying the learned algorithm to the devices so that it can be applied locally. In either case, the learning step is implemented outside of the devices.

Recently, spiking neural networks (SNNs) have started to bridge the gap to their widely used cousins, artificial neural networks (ANNs). One crucial ingredient for this success was the consolidation of the error backpropagation algorithm with SNNs. However, so far SNNs have mostly been applied to tasks akin to sensory processing like image or audio recognition. Such input data is inherently well-structured, e.g., the pixels in an image have fixed positions, and applicability is often limited to a narrow set of tasks that utilize this structure and do not scale well beyond the initial data domain.

Complex systems like industrial factory systems can be described using the common language of knowledge graphs, allowing the usage of graph embedding algorithms to make context-aware predictions in these information-packed environments.

It is an object of the invention to provide an industrial device and a method for building and/or processing a knowledge graph that provide an alternative to the state of the art.

The objectives of the invention are solved by the independent claims. Further advantageous arrangements and embodiments of the invention are set forth in the respective dependent claims.

The industrial device for building and/or processing a knowledge graph comprises

- at least one sensor and/or at least one data source configured for providing raw data,
- an ETL component, configured for converting the raw data into triple statements, using mapping rules,
- a triple store, storing the triple statements as a dynamically changing knowledge graph,
- a learning component, configured for processing the triple statements in a learning mode, and for performing an inference in an inference mode, and
- a control component, configured for switching between different modes of operation of the learning component.

The method for building and/or processing a knowledge graph comprises the following operations performed by an industrial device:

- providing, by at least one sensor and/or at least one data source raw data,
- converting, by an ETL component, the raw data into triple statements, using mapping rules,
- storing, by a triple store, the triple statements as a dynamically changing knowledge graph,
- processing, by a learning component, the triple statements in a learning mode,
- switching, by a control component, operation of the learning component from the learning mode to an inference mode, and
- performing, by the control component, an inference in the inference mode.

The following advantages and explanations are not necessarily the result of the object of the independent claims. Rather, they may be advantages and explanations that only apply to certain embodiments or variants.

Training of AI methods on knowledge graph data is typically an intensive task and therefore not implemented directly at the Edge, i.e. on the devices that produce the data. By Edge we refer to computing resources which either directly belong to a system that generates the raw data (e.g. an industrial manufacturing system), or are located very closely to it (physically and/or logically in a networked topology, e.g. in an shop-floor network), and typically have limited computational resources.

According to some embodiments, the industrial device and the method provide training AI algorithms on knowledge graph data which can be embedded directly into the industrial device, being able to continuously learn based on observations without requiring external data processing servers.

It is advantageous to train these algorithms directly at the devices producing the data because no data extraction or additional computing infrastructure is required. The latency between data observation and availability of a trained algorithm that the existing methods incur (due to the need to extract, transformation and process the data off-device) is eliminated.

One of the main advantages of knowledge graphs is that they are able to seamlessly integrate data from multiple sources or multiple domains. Because of this, embodiments of the industrial device and the method are particularly advantageous on industrial devices which typically act as concentrators of information, like PLC controllers (which by design gather all the information from automation systems, e.g. from all the sensors), industrial PCs implementing SCADA systems, network hubs and switches, including industrial ethernet switches, and industrial gateways connecting automation systems to cloud computing resources.

According to some embodiments, the industrial device and the method integrate learning and inference in a single system, which eliminates the need to extract data. The learning system is able to adapt dynamically to data events, as well as more responsive. According to some embodiments, operator input and feedback can control the learning process.

According to some embodiments, the industrial device and the method is integrating knowledge from different domains and sources, like dynamic, real-time process data and static data from diverse engineering tools. As a result, the learned model is capable of making context-aware predictions regarding novel system events and can be used to detect anomalies resulting from, e.g., cybersecurity incidents.

According to an embodiment, the learning component and/or the control component are implemented with a processor, for example a microcontroller or a microprocessor, executing a RESCAL algorithm, a TransE algorithm, a DistMult algorithm, or a Graph convolutional neural network.

According to other embodiments, the learning component and/or the control component are implemented with neuromorphic hardware. The neuromorphic hardware embodiments empower edge learning devices for online graph learning and analytics. Being inspired by the mammalian brain, neuromorphic processors promise energy efficiency, fast emulation times as well as continuous learning capabilities. In contrast, graph-based data processing is commonly found in settings foreign to neuromorphic computing, where huge amounts of symbolic data from different data silos are combined, stored on servers and used to train models on the cloud. The aim of the neuromorphic hardware embodiments is to bridge these two worlds for scenarios where graph-structured data has to be analyzed dynamically, without huge data stores or off-loading to the cloud - an environment where neuromorphic devices have the potential to thrive.

Some embodiments of the industrial device and the method implement innovative learning rules that facilitate online learning and are suitable to be implemented in ultra-efficient hardware architectures, for example in low-power, highly scalable processing units, e.g. neural processing units, neural network accelerators or neuromorphic processors, for example spiking neural network systems.

Some embodiments of the industrial device and the method combine learning and inference in a seamless manner.

Some embodiments of the industrial device and the method introduce an energy-based model for tensor-based graph embedding that is compatible with features of biological neural networks like dendritic trees, spike-based sampling, feedback-modulated, Hebbian plasticity and memory gating, suitable for deployment on neuromorphic processors.

Some embodiments of the industrial device and the method provide graph embeddings for multi-relational graphs, where instead of working directly with the graph structure, it is encoded in the temporal domain of spikes: entities and relations are represented as spikes of neuron populations and spike time differences between populations, respectively. Through this mapping from graph to spike-based coding, SNNs can be trained on graph data and predict novel triple statements not seen during training, i.e., perform inference on the semantic space spanned by the training graph. An embodiment uses non-leaky integrate-and-fire neurons, guaranteeing that the model is compatible with current neuromorphic hardware architectures that often realize some variant of the LIF neuron model.

Some embodiments of the industrial device and the method are especially interesting for the applicability of neuromorphic hardware in industrial use-cases, where graph embedding algorithms find many applications, e.g., in form of recommendation systems, digital twins, semantic feature selectors or anomaly detectors.

In an embodiment of the industrial device and method, the learning component and/or the control component implement a RESCAL algorithm, a TransE algorithm, a DistMult algorithm, or a Graph convolutional neural network.

In an embodiment of the industrial device and method, the industrial device is a field device, an edge device, a sensor device, an industrial controller, in particular a PLC controller, an industrial PC implementing a SCADA system, a network hub, a network switch, in particular an industrial ethernet switch, or an industrial gateway connecting an automation system to cloud computing resources.

In an embodiment of the industrial device and method, the control component is autonomous or processing external signals.

In an embodiment of the industrial device and method, the learning component is configured for calculating a likelihood of a triple statement during inference mode.

In an embodiment of the industrial device and method, the triple store also stores a pre-loaded static sub-graph.

In an embodiment, the industrial device includes a statement handler, configured for triggering an automated action based on the inference of the learning component.

In an embodiment of the industrial device and method, the knowledge graph is an industrial knowledge graph describing parts of an industrial system, with nodes of the knowledge graph representing physical objects, in particular sensors, industrial controllers, robots, drives, manufactured objects, tools and/or elements of a bill of materials, and with nodes of the knowledge graph representing abstract entities, in particular attributes, configurations or skills of the physical objects, production schedules and plans, and/or sensor measurements.

In an embodiment of the industrial device and method, the learning component and/or the control component are implemented as neuromorphic hardware, in particular as an application specific integrated circuit, a field-programmable gate array, a wafer-scale integration, a hardware with mixed-mode VLSI neurons, or a neuromorphic processor, in particular a neural processing unit or a mixed-signal neuromorphic processor.

In an embodiment of the industrial device and method, the learning component consists of an input layer containing node embedding populations of neurons, with each node embedding populations representing an entity contained in the triple statements, and an output layer, containing output neurons configured for representing a likelihood for each possible triple statement. The learning component models a probabilistic, sampling-based model derived from an energy function, wherein the triple statements have minimal energy. The control component is configured for switching the learning component into a data-driven learning mode, configured for training the component with a maximum likelihood learning algorithm minimizing energy in the probabilistic, sampling-based model, using only the triple statements, which are assigned low energy values, into a sampling mode, in which the learning component supports generation of triple statements, and

into a model-driven learning mode, configured for training the component with the maximum likelihood learning algorithm using only the generated triple statements, with the learning component learning to assign high energy values to the generated triple statements.

In an embodiment of the industrial device and method, the control component is configured to alternately present inputs to the learning component by selectively activating subject and object populations among the node embedding populations, set hyperparameters of the learning component, in particular a factor ($\eta$) that modulates learning updates of the learning component, read output of the learning component, and use output of the learning component as feedback to the learning component.

In an embodiment of the industrial device and method, the output layer has one output neuron for each possible relation type of the knowledge graph.

In an embodiment of the industrial device and method, the output neurons are stochastic dendritic output neurons, storing embeddings of relations that are given between a subject and an object in the triple statements in their dendrites, summing all dendritic branches into a final score, which is transformed into a probability using an activation function.

In an embodiment of the industrial device and method, depending on the mode of the learning component, an output of the activation function is a prediction of the likelihood of a triple statement or a transition probability.

In an embodiment of the industrial device and method, learning updates for relation embeddings are computed directly in dendritic trees of the stochastic, dendritic output neurons.

In an embodiment of the industrial device and method, learning updates for entity embeddings are computed using static feedback connections from each output neuron to neurons of the node embedding populations.

In an embodiment of the industrial device and method, in the sampling mode, by sampling from the activation function, a binary output signals to the control component whether a triple statement is accepted.

In an embodiment of the industrial device and method, the learning component includes first neurons forming a first node embedding population, representing a first entity contained in the triple statements by first spike times of the first neurons during a recurring time interval. The learning component includes second neurons forming a second node embedding population, representing a second entity contained in the triple statements by second spike times of the second neurons during the recurring time interval. A relation between the first entity and the second entity is represented as the differences between the first spike times and the second spike times.

In an embodiment of the industrial device and method, the differences between the first spike times and the second spike times consider an order of the first spike times in relation to the second spike times. Alternatively, the differences are absolute values.

In an embodiment of the industrial device and method, the relation is stored in one of the output neurons. The relation is in particular given by vector components that are stored in dendrites of the output neuron.

In an embodiment of the industrial device and method, the first neurons are connected to a monitoring neuron. Each first neuron is connected to a corresponding parrot neuron. The parrot neurons are connected to the output neurons. The parrot neurons are connected to an inhibiting neuron.

In an embodiment of the industrial device and method, the first neurons and the second neurons are spiking neurons, in particular non-leaky integrate-and-fire neurons or current-based leaky integrate-and-fire neurons.

In an embodiment of the industrial device and method, each of the first neurons and second neurons only spikes once during the recurring time interval. Alternatively, only a first spike during the recurring time interval is counted.

In an embodiment of the industrial device and method, each node embedding population is connected to an inhibiting neuron, and therefore selectable by inhibition of the inhibiting neuron.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Unless stated otherwise, identical reference signs denote the same features between drawings. Included in the drawings are the following Figures:

Fig. 1      shows an industrial device ED with an embedded system architecture capable of knowledge graph selflearning,

Fig. 2      shows an embodiment of a neural network that combines learning and inference in a single architecture,

Fig. 3      shows information processing in a stochastic, dendritic output neuron SDON,

Fig. 4      shows how entity embeddings are learned by node embedding populations,

Fig. 5    shows how a relation embeddings are directly learned from inputs to dendritic branches of the stochastic, dendritic output neuron SDON,

Fig. 6    shows a data-driven learning mode of a learning component LC,

Fig. 7    shows a sampling mode of the learning component LC,

Fig. 8    shows a model-driven learning mode of the learning component LC,

Fig. 9    shows an evaluating mode of the learning component LC for evaluating triple statements,

Fig. 10    shows an embodiment of the learning component LC with a spike-based neural network architecture,

Fig. 11    shows first spike times P1ST of a first node embedding population and second spike times P2ST of a second node embedding population,

Fig. 12    shows a disinhibition mechanism for a node embedding population NEP,

Fig. 13    shows a monitoring mechanism for a node embedding population NEP,

Fig. 14    shows an example of an industrial knowledge graph KG,

Fig. 15    shows examples of triple statements T corresponding to the industrial knowledge graph KG shown in Fig. 14,

Fig. 16    shows a calculation of spike time differences CSTD between a first node embedding population NEP1 and a second node embedding population NEP2,

Fig. 17    shows an example of spike patterns and spike time differences for a valid triple statement (upper section) and an invalid triple statement (lower section),

Fig. 18    shows an embodiment of the learning component LC with fixed input spikes FIS, plastic weights W0, W1, W2 encoding the spike times of three node embedding populations NEP, which statically project to dendritic compartments of output neurons ON,

Fig. 19    shows first examples E_SpikeE-S of learned spike time embeddings and second examples E_SpikE of learned spike time embeddings,

Fig. 20    shows learned relation embeddings in the output neurons,

Fig. 21    shows a temporal evaluation of triples 's - p - o', for varying degrees of plausibility of the object,

Fig. 22    shows the integration of static engineering data END, dynamic application activity AA and network events NE in a knowledge graph KG,

Fig. 23    shows an anomaly detection task where an application is reading data from an industrial system, and

Fig. 24    shows scores SC generated by the learning component for the anomaly detection task.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

In the following description, the terms "mode" and "phase" are used interchangeably. If a learning component runs in a first mode, then it also runs for the duration of a first phase, and vice versa. Also, the terms "triple" and "triple statement" will be used interchangeably.

Nickel, M., Tresp, V. & Kriegel, H.-P.: A three-way model for collective learning on multi-relational data, in Icml 11 (2011), pp. 809-816, disclose RESCAL, a widely used graph embedding algorithm. The entire contents of that document are incorporated herein by reference.

Yang, B., Yih, W.-t., He, X., Gao, J. and Deng, L.: Embedding entities and relations for learning and inference in knowledge bases, arXiv preprint arXiv:1412.6575 (2014), disclose DistMult, which is an alternative to RESCAL. The entire contents of that document are incorporated herein by reference.

Bordes, A. et al.: Translating embeddings for modeling multi-relational data, in Advances in neural information processing systems (2013), pp. 2787-2795, disclose TransE, which is a translation based embedding method. The entire contents of that document are incorporated herein by reference.

Schlichtkrull, M., Kipf, T.N., Bloem, P., van den Berg, R., Titov, I. and Welling, M.: Modeling Relational Data with Graph Convolutional Networks, arXiv preprint arXiv:1703.06103 (2017), disclose Graph Convolutional Neural networks. The entire contents of that document are incorporated herein by reference.

Hopfield, J. J.: Neural networks and physical systems with emergent collective computational abilities, in Proceedings of the national academy of sciences 79, pp. 2554-2558 (1982), discloses energy-based models for computational neuroscience and artificial intelligence. The entire contents of that document are incorporated herein by reference.

Hinton, G. E., Sejnowski, T. J., et al.: Learning and relearning in Boltzmann machines, Parallel distributed processing: Explorations in the microstructure of cognition 1, 2 (1986), disclose Boltzmann machines, which combine sampling with energy-based models, using wake-sleep learning. The entire contents of that document are incorporated herein by reference.

Mostafa, H.: Supervised learning based on temporal coding in spiking neural networks, in IEEE transactions on neural networks and learning systems 29.7 (2017), pp. 3227-3235, discloses the nLIF model, which is particularly relevant for the sections "Weight gradients" and "Regularization of weights" below. The entire contents of that document are incorporated herein by reference.

Comsa, I. M., et al.: Temporal coding in spiking neural networks with alpha synaptic function, arXiv preprint arXiv:1907.13223 (2019), disclose an extension of the results of Mostafa (2017) for the current-based LIF model. The entire contents of that document are incorporated herein by reference.

Göltz, J., et al.: Fast and deep: Energy-efficient neuromorphic learning with first-spike times, arXiv:1912.11443 (2020), also discloses an extension of the results of Mostafa (2017) for the current-based LIF model, allowing for broad applications in neuromorphics and more complex dynamics. The entire contents of that document are incorporated herein by reference.

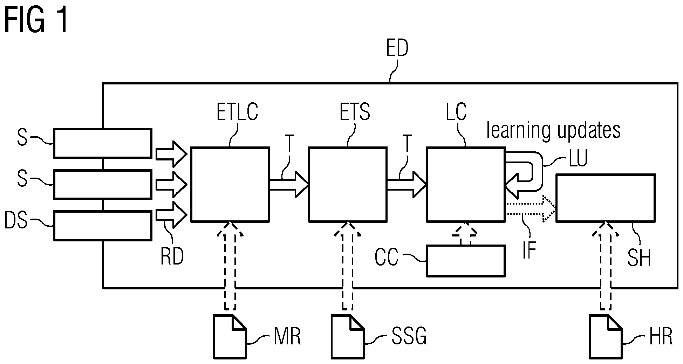

Fig. 1 shows an industrial device ED with an embedded system architecture capable of knowledge graph self-learning. The industrial device ED can learn in a self-supervised way based on observations, and perform inference tasks (e.g. link prediction) based on the learned algorithms. Switching between learning mode and inference mode can be autonomous or based on stimuli coming from an external system or operator. The industrial device ED integrates learning and inference on knowledge graph data on a single architecture, as will be described in the following.

The industrial device ED contains one or more sensors S or is connected to them. The industrial device can also be connected to one or more data sources DS or contain them. In other words, the data sources DS can also be local, for example containing or providing internal events in a PLC controller.

Examples of the industrial device are a field device, an edge device, a sensor device, an industrial controller, in particular a PLC controller, an industrial PC implementing a SCADA system, a network hub, a network switch, in particular an industrial ethernet switch, or an industrial gateway connecting an automation system to cloud computing resources.

The sensors S and data sources DS feed raw data RD into an ETL component ETLC of the industrial device ED. The task of the ETL component ETLC is to extract, transform and load (ETL) sensor data and other events observed at the industrial device ED and received as raw data RD into triple statements T according to a predefined vocabulary (a set of entities and relationships) externally deployed in the industrial device ED in the form of a set of mapping rules MR. The mapping rules MR can map local observations contained in the raw data RD such as sensor values, internal system states or external stimuli to the triples statements T, which are semantic triples in the form 's-p-o' (entity s has relation p with entity o), for example RDF triples. Different alternatives for mapping the raw data RD to the triple statements T exist in the literature, e.g. R2RML for mapping between relational database data and RDF. In this case a similar format can be generated to map events contained in the raw data RD to the triple statements T. An alternative to R2RML is RML, an upcoming, more general standard that is not limited to relational databases or tabular data.

Examples for the triple statements T are

- "temperature_sensor has_reading elevated",
- "ultrasonic_sensor has_state positive",
- "machine_operator sets_mode test", or
- "applicationX reads_data variableY",

which correspond to events such as

- a built-in temperature sensor as one of the sensors S showing a higher than usual reading,
- an ultrasonic sensor as one of the sensors S detecting an object,
- an operator setting the device in test mode, or
- an external application reading certain local variables.

The latter information may be available from events that are logged in an internal memory of the industrial device ED and fed into the raw data RD. The ETL component ETLC applies the mapping rules MR, converting specific sets of local readings contained in the raw data RD into the triple statements T.

The triple statements T are stored in an embedded triple store ETS, creating a dynamically changing knowledge graph. The embedded triple store ETS is a local database in a permanent storage of the industrial device ED (e.g. a SD card or hard disk).

Besides the previously described triple statements T, which are created locally and dynamically by the ETL component ETLC, and which can be termed observed triple statements, the embedded triple store ETS can contain a pre-loaded set of triple statements which constitute a static sub-graph SSG, i.e. a part of the knowledge graph which does not depend on the local observations contained in the raw data RD, i.e. is static in nature. The static sub-graph SSG can provide, for example, a self-description of the system (e.g. which sensors are available, which user-roles or applications can interact with it, etc). The triple statements of the static sub-graph SSG are also stored in the embedded triple store ETS. They can be linked to the observed data and provide additional context.

All triple statements stored in the embedded triple store ETS are provided to a learning component LC, the central element of the architecture. The learning component LC implements a machine learning algorithm such as the ones described below. The learning component LC can perform both learning as well as inference (predictions). It is controlled by a control component CC that can switch between different modes of operation of the learning component LC, either autonomously (e.g. periodically) or based on external stimuli (e.g. a specific system state, or an operator provided input).

One of the selected modes of operation of the learning component LC is a learning mode, where the triple statements T are provided to the learning component LC, which in response iteratively updates its internal state with learning updates LU according to a specific cost function as described below. A further mode of operation is inference mode, where the learning component LC makes predictions about the likelihood of unobserved triple statements. Inference mode can either be a free-running mode, whereby random triple statements are generated by the learning component LC based on the accumulated knowledge, or a targeted inference mode, where the control component CC specifically sets the learning component LC in such a way that the likelihood of specific triple statements is evaluated.

Finally, the industrial device ED can be programmed to take specific actions whenever the learning component LC predicts specific events with an inference IF. Programming of such actions is made via a set of handling rules HR that map specific triple statements to software routines to be executed. The handling rules HR are executed by a statement handler SH that receives the inference IF of the learning component LC.

For instance, in a link prediction setting, the inference IF could be a prediction of a certain triple statement, e.g. "system enters_state error", by the learning component LC. This inference IF can trigger a routine that alerts a human operator or that initiates a controlled shutdown of the industrial device ED or a connected system. Other types of trigger are also possible, different than a link prediction. For instance, in an anomaly detection setting, a handler could be associated to the actual observation of a specific triple statement, whenever its predicted likelihood (inference IF) by the learning component LC is low, indicating that an unexpected event has occurred.

In a simple case, the handling rules HR can be hardcoded in the industrial device ED (e.g. a fire alarm that tries to predict the likelihood of a fire), but in a more general case can be programmed in a more complex device (e.g. a PLC controller as industrial device ED) from an external source, linking the predictions of the learning component LC to programmable software routines such as PLC function blocks.

Various learning algorithms and optimization functions are described in the following, which are suitable for implementing the learning component LC and/or control component CC. Some of these algorithms combine learning and inference in a seamless manner and are suitable for implementation in low-power, highly scalable processing units, e.g. neural network accelerators or neuromorphic processors such as spiking neural network systems.

The learning component LC (and the control component CC if it guides the learning process) can be implemented with any algorithm that can be trained on the basis of knowledge graphs. The embedded triple store ETS contains potentially multiple graphs derived from system observation (triple statements T generated by the ETL component ETLC, plus the pre-loaded set of triple statements which constitute the static sub-graph SSG). Separation into multiple graphs can be done on the basis of time (e.g. separating observations corresponding to specific time periods), or any other similar criteria, for example, in an industrial manufacturing system, separating the triple statements T into independent graphs can be performed depending on the type of action being carried out by the industrial manufacturing system, or the type of good being manufactured, when the triple statements T are observed.

The learning component LC (and the control component CC if it guides the learning process) can be implemented using either transductive algorithms, which are able to learn representations for a fixed graph, for example RESCAL, TransE, or DistMult, or inductive algorithms, which can learn filters that generalize across different graphs, for example Graph Convolutional Neural networks (Graph CNN). In the case of the former an individual model is trained for each graph (feeding triple statements T corresponding to each single graph to independent model instances) whereas in the case of the latter, a single model is trained based on all the graphs.

In either case, we can differentiate between a learning mode, where the triple statements T are presented to the learning component LC which learns a set of internal operations, parameters and coefficients required to solve a specific training objective, and an inference mode, where learning component LC evaluates the likelihood of newly observed or hypothetical triple statements on the basis of the learned parameters. The training objective defines a task that the learning algorithm implemented in the learning component LC tries to solve, adjusting the model parameters in the process. If the industrial device ED is an embedded device, then it is advantageous to perform this step in a semi-supervised or unsupervised manner, i.e. without explicitly providing ground truth labels (i.e. the solution to the problem). In the case of a graph algorithm, this can be accomplished for instance by using a link prediction task as the training objective. In this setting, the learning process is iteratively presented with batches containing samples from the observed triples, together with internally generated negative examples (non-observed semantic triples), with the objective of minimizing a loss function based on the selected examples, which will assign a lower loss when positive and negative examples are assigned high and low likelihood respectively by the algorithm, iteratively adjusting the model parameters accordingly.

The algorithm selected determines the specific internal operations and parameters as well as the specific loss/scoring function that guides the learning process, which can be implemented in a conventional CPU or DSP processing unit of the industrial device ED, or alternatively on specialized machine learning co-processors. For example, in the case of a RESCAL implementation a graph is initially converted to its adjacency form with which the RESCAL gradient descent optimization process is performed. The mathematical foundations of this approach will be explained in more detail in later embodiments. An alternative is provided by the scoring function of DistMult, which reduces the number of parameters by imposing additional constraints in the learned representations. A further alternative would be to use a translation based embedding method, such as TransE which uses the distance between object embedding and subject embedding translated by a vectorial representation of the predicate connecting them.

The previous examples can be considered as decoder based embedding methods. In the case of a Graph CNN based implementation, the algorithm to be trained consists of an encoder and a decoder. The encoder comprises multiple convolutional and dense filters which are applied to the observed graph provided in a tensor formulation, given by an adjacency matrix indicating existing edges between nodes, and a set of node features which typically correspond to literal values assigned to the corresponding node in the RDF representation in the embedded triple store ETS, to which a transformation can be optionally applied in advance (e.g. a clustering step if the literal is of numeric type, or a simple encoding into integer values if the literal is of categorical type). On the other hand, the decoder can be implemented by a DistMult or similar decoder network that performs link scoring from pairs of entity embeddings.

It should be noted that most of the score functions required by knowledge graph learning algorithms, in addition to tunable parameters which are optimized during learning, typically also contain a set of hyperparameters that control the learning process of the learning component LC itself, such as learning rates, batch sizes, iterations counts, aggregation schemes and other model hyperparameters present in the loss function. In the context of the present embodiment, these can be preconfigured within the control component CC and/or the learning component LC in the industrial device ED with known working values determined by offline experimentation. An alternative, performing a complete or partial hyperparameter search and tuning directly on the industrial device ED would also be possible, at the cost of potentially having to perform an increased number of learning steps, in order to locally evaluate the performance of the algorithms for different sets of hyperparameters on the basis of an additional set of triple statements reserved for this purpose.

To set up the industrial device ED, the mapping rules MR need to be defined and stored on the industrial device ED. The learning process can be controlled with external operator input into the control component CC and feedback, or be autonomous as described above.

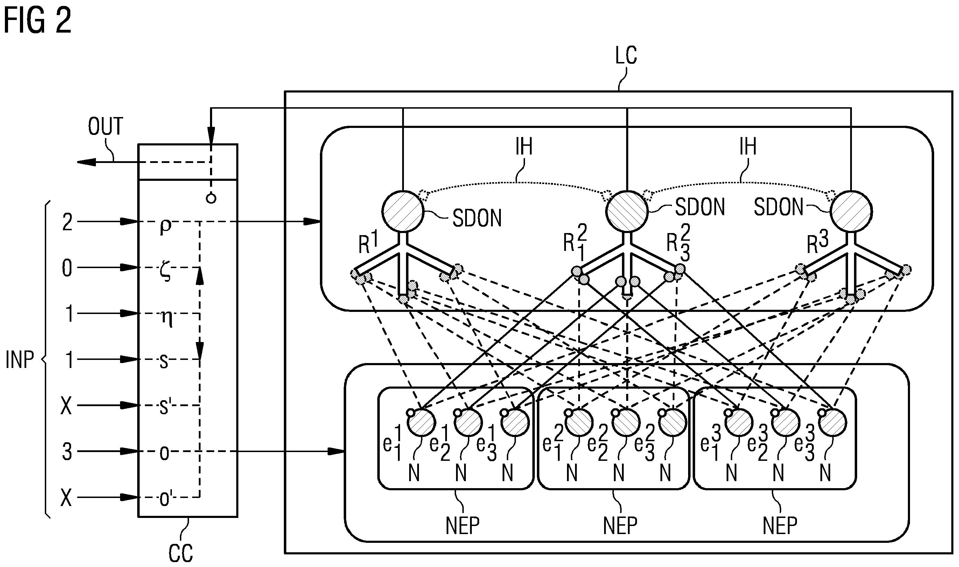

Fig. 2 shows an embodiment of the learning component LC in the form of a neural network that combines learning and inference in a single architecture. Here, the learning component LC is embodied as a probabilistic learning system that realizes inference and learning in the same substrate. The state of the learning component LC is described by an energy function E that ranks whether a triple statement (or several triple statements) is true or not, with true triple statements having low energy and false triple statements having high energy. Examples for the energy function E will be given below. From the energy function E, interactions between components of the learning component LC can be derived. For simplicity, we describe the probabilistic learning system of the learning component LC for the DistMult scoring function and provide a generalization to RESCAL later.

The learning component LC is composed of two parts: first, a pool of node embedding populations NEP of neurons N that represent embeddings of graph entities (i.e. the subjects and objects in the triple statements), and second, a population of stochastic, dendritic output neurons SDON that perform the calculations (scoring of triple statements, proposing of new triple statements). Similar to Fig. 1, a control component CC is used to provide input to the learning component LC and to switch between different operation modes of the learning component LC. The control component CC receives an input INP and has an output OUT.

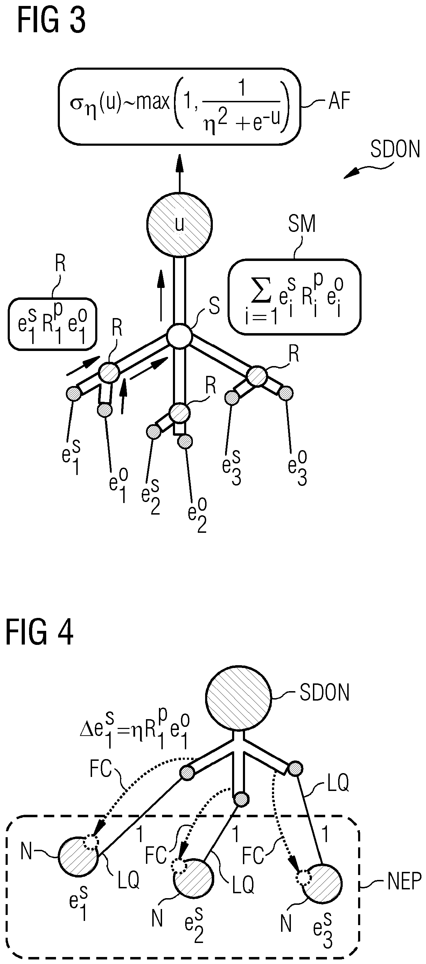

Each entity in the graph is represented by one of the node embedding populations NEP, storing both its embeddings (real-valued entries) and accumulated gradient updates. The neurons N of each node embedding population NEP project statically one-to-one to dendritic compartments of the stochastic, dendritic output neurons SDON, where inputs are multiplied together with a third factor R, as shown in Fig. 3.

In the example shown in Fig. 2, the left and the right node embedding populations NEP are active, while the node embedding population NEP in the middle is passive.

Fig. 3 shows information processing in one of the stochastic, dendritic output neurons SDON. Values R are stored in the dendrites and represent the embeddings of relations in the knowledge graph, in other words the relations that are given between subject and object by the triple statements. A sum SM over all dendritic branches, which is a passive and linear summation of currents, yields the final score, which is transformed into a probability using an activation function AF. By sampling from the activation function AF, a binary output (akin to a spike in spiking neural networks, see later embodiments) is produced that signals whether a triple statement is accepted (=true) or rejected (=false).

Returning to Fig. 2, using the control component CC, subject and object populations can be selectively activated among the node embedding populations NEP (all others are silenced, see later embodiments for a possible mechanism). Inhibition IH between the stochastic, dendritic output neurons SDON guarantees that only the strongest (or first) responding stochastic, dendritic output neuron SDON produces output, as it silences its neighbours (a winner-take-all circuit / inhibitory competition, although this feature is not strictly required). Furthermore, given a triple statement (s,p,o), the learning component LC can be used to create new triple statements (s,p,o') or (s',p,o) (or, in principle, (s,p',o) as well) based on previously learned knowledge, depending on whether moving in embedding space increases or decreases the energy of the system (using the Metropolis-Hastings algorithm, see later embodiments). These operations can be performed as well by the learning component LC when appended by an additional circuit in the node embedding populations NEP that calculates the difference between embeddings (see later embodiments). By feeding back the output of the learning component LC into the control component CC, results can either be read out or directly used in a feedback loop, allowing, e.g., the autonomous and continuous generation of valid triple statements based on what the learning component LC has learned, or pattern completion, i.e., probabilistic evaluation of incomplete triple statements (s,p,?), (?,p,o) or (s,?,o).

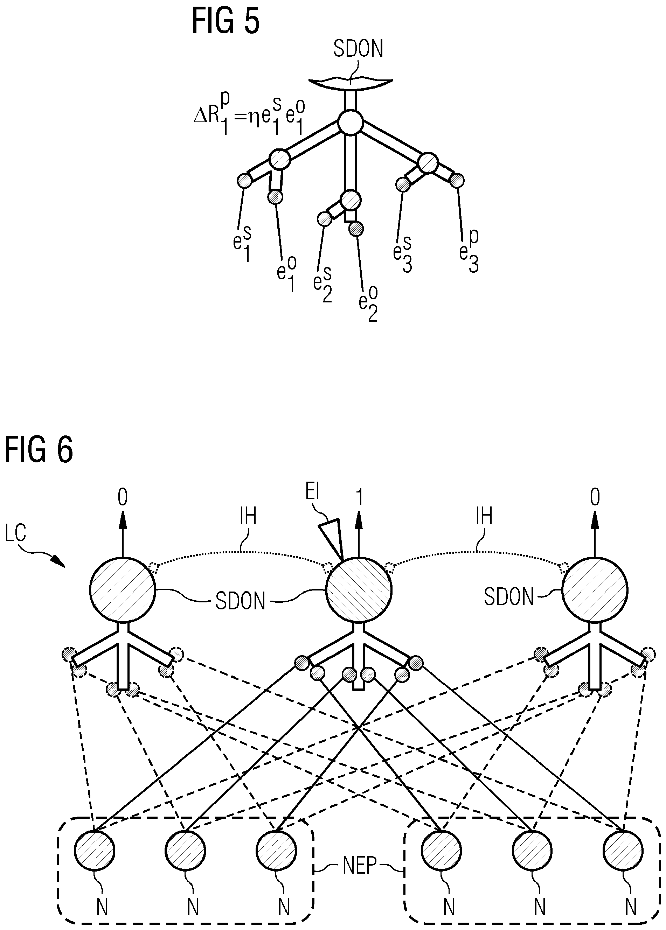

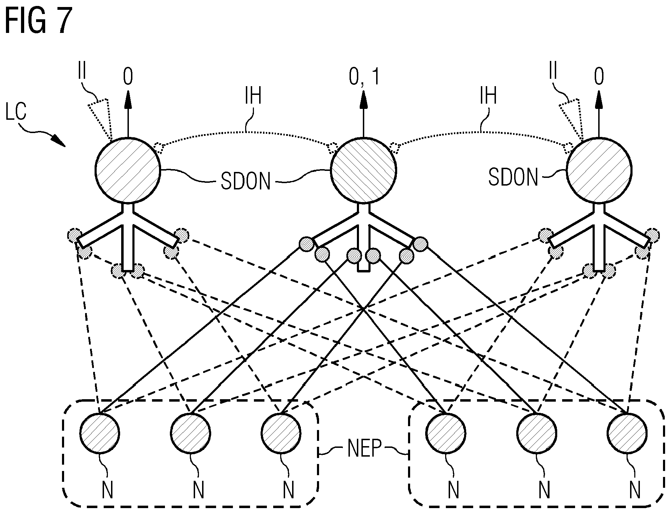

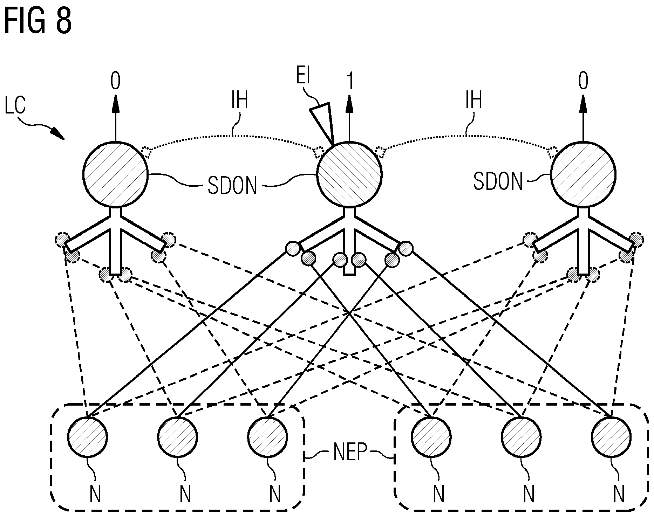

In general, the learning component LC can be operated in three modes or phases controlled by a single parameter $\eta=[1,0,-1]$: A data-driven learning mode ($\eta=1$) as shown in Fig. 6, which is a positive learning mode, a sampling mode ($\eta=0$) as shown in Fig. 7, which is a free-running mode, and a model-driven learning mode ($\eta=-1$) as shown in Fig. 8, which is a negative learning (forgetting) mode where samples generated during the sampling mode are presented as negative examples. By switching through these modes in this order, the learning component LC can be operated first in a data-driven learning phase, then in a sampling phase, and then in a model-driven learning phase.

An additional input $\zeta$ is used to explicitly control plasticity, i.e., how to clamp the stochastic, dendritic output neurons SDON, apply updates or clear (reset to 0) accumulated updates. Learning updates LU (as shown in Fig. 1) for entity and relation embeddings can be computed locally (both spatially and temporally) in the learning component LC. Learning updates LU for each entity embedding can be computed using static feedback connections FC from each stochastic, dendritic output neuron SDON to the neurons N of the respective node embedding population NEP as shown in Fig. 4. Learning updates LU for relation embeddings can be computed directly in the dendritic trees of the stochastic, dendritic output neurons SDON as shown in Fig. 5. The learning updates LU do not require any global computing operations, e.g., access to a global memory component. Using the learning updates LU, the learning component LC learns to model the distribution underlying the data generation process, as will be described in more detail in a later embodiment.

In other words, Fig. 4 shows how entity embeddings are learned using local quantities LQ received in the dendrites of the stochastic, dendritic output neurons SDON, which are sent back via static feedback connections FC to the neurons N of the node embedding population NEP that is embedding the respective entity. Fig. 5 shows how relation embeddings are directly learned from the inputs to the dendritic branches of the stochastic, dendritic output neurons SDON.

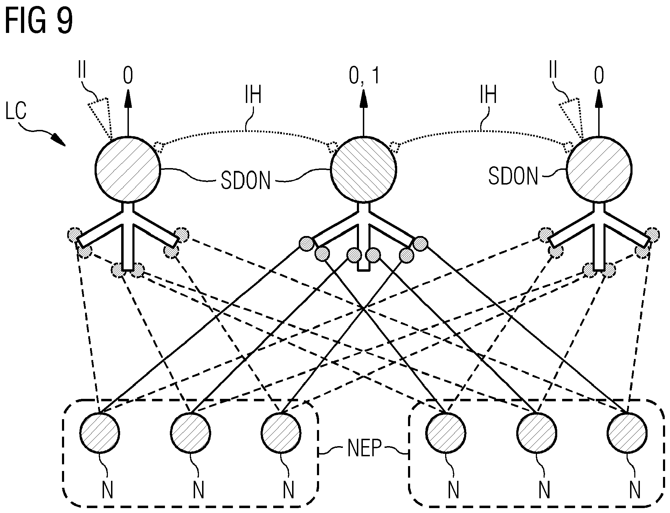

Fig. 6 - 9 show the different phases or modes that the learning component LC can be run in, showing the same structures of the learning component LC that Fig. 2 - 5 are showing, in particular the stochastic, dendritic output neurons SDON and the node embedding populations NEP with neurons N. Two node embedding populations NEP are active. One of them could be representing the subject of a triple statement and the other the object. The triangles in Fig. 6 and 8 signify an exciting input EI, while the triangles in Fig. 7 and 9 signify an inhibiting input II (to select stochastic, dendritic output neurons SDON).

In the data-driven learning mode shown in Fig. 6, data, for example the triple statements T shown in Fig. 1 and 15, are presented to the learning component LC and parameter updates are accumulated in order to imprint the triple statements T.

In the sampling mode shown in Fig. 7, the learning component LC generates triple statements. More specifically, potential permutations of triple statements are iteratively generated by the control component CC and presented to the learning component LC, with output of the stochastic, dendritic output neurons SDON indicating to the control component CC if the suggested triple statements are promising.

Fig. 8 shows the model-driven learning mode that is used for replaying the previously (in the sampling mode) generated triple statements, in which the generated triple statements are used for negative parameter updates making the learning component LC forget the generated triple statements.

Fig. 9 shows an evaluating mode of the learning component LC for evaluating triple statements, which is similar to the data-driven learning mode shown in Fig. 6 and the model-driven learning mode shown in Fig. 8, but learning has been turned off. The evaluating mode shown in Fig. 9 can be used to score presented triple statements.

In case of many entities, to reduce the amount of required wiring, a sparse connectivity can be used between the node embedding populations NEP and the stochastic, dendritic output neurons SDON. To realize the RESCAL score function, each node embedding population NEP has to be doubled (once for subjects and objects, as the scoring function is not symmetric). This way, each graph entity has now two embeddings (for subject and object, respectively), which can be synchronized again by including "subj_embedding isIdenticalTo obj_embedding" triple statements in the training data.

The learning component LC combines global parameters, feedback and local operations to realize distributed computing rendered controllable by a control component CC to allow seamless transition between inference and learning in the same system.

Tensor-based graph embeddings

A widely used graph embedding algorithm is RESCAL. In RESCAL, a graph is represented as a tensor $X_{s,p,o}$, where entries are 1 if a triple *'s - p - o'* (entity $s$ has relation $p$ with entity $o$) occurs in the graph and 0 otherwise. This allows us to re-phrase the goal of finding embeddings as a tensor factorization problem

$$X_{s,p,o} \overset{!}{=} e_s^T R_p e_o,$$

(1)

with each graph entity $s$ being represented by a vector $e_s$ and each relation $p$ by a matrix $R_p$. The problem of finding embeddings is then equivalent to minimizing the reconstruction loss

$$L_{MSE} = \sum_{s,p,o} ||X_{s,p,o} - e_s^T R_p e_o||^2$$

(2)

which can either be done using alternating least-square optimization or gradient-descent-based optimization. Usually, we are only aware of valid triples, and the validity of all other triples are unknown to us and cannot be modeled by setting the respective tensor entries to 0. However, only training on positive triples would result in trivial solutions that score all possible triples high. To avoid this, so-called 'negative samples' are generated from the training data by randomly exchanging either subject or object entity in a data triple, e.g., *'s-p-o'* $\in D \rightarrow 'a$-$p$-$o'$ or *'s-p-o'* $\in D \rightarrow 's$-$p$-$b'$. During training, these negative samples are then presented as invalid triples with tensor entry 0. However, negative samples are not kept but newly generated for each parameter update.

Energy-based tensor factorization

We propose a probabilistic model of graph embeddings based on an energy function that takes inspiration from the RESCAL scoring function. Energy-based models have a long history in computational neuroscience and artificial intelligence, and we use this as a vehicle to explore possible dynamic systems that are capable of implementing computations on multi-relational graph data.

Energy function for triples

Given a tensor *X* that represents a graph (or subgraph), we assign it the energy

$$E(X) = - \sum_{s,p,o} X_{s,p,o}\, \theta_{s,p,o}$$

(5)

where $\theta_{s,p,o}$ is the RESCAL score function (Eq. (4)). From this, we define the probability of observing *X*

$$p(X) = \frac{1}{Z} e^{-E(X)},$$

(6)

with

$$Z = \sum_{X'} e^{-E(X')}$$

(7)

where we sum over all possible graph realizations *X'*. Here, the $X_{s,p,o} \in [0,1]$ are binary random variables indicating whether a triple exists, with the probability depending on the score of the triple. For instance, a triple (*s,p,o*) with positive score $\theta_{s,p,o}$ is assigned a negative energy and hence a higher probability that $X_{s,p,o}$ = 1. This elevates RESCAL to a probabilistic model by assuming that the observed graph is merely a sample from an underlying probability distribution, i.e., it is a collection of random variables. Since triples are treated independently here, the probability can be rewritten as

$$p(X) = \prod_{X_{s',p',o'}=0} \left(1 - \sigma\left(\theta_{s',p',o'}\right)\right) \prod_{X_{s,p,o}=1} \sigma\left(\theta_{s,p,o}\right)$$

(8)

where $\sigma(\cdot)$ is the logistic function. Thus, the probability of a single triple (*s,p,o*) appearing is given by $\sigma(\theta_{s,p,o})$.

Maximum likelihood learning

The model is trained using maximum likelihood learning, i.e., node and edge embeddings are adjusted such that the likelihood (or log-likelihood) of observed triples is maximized

$$\Delta R_k \propto \langle \frac{\partial}{\partial R_k} \ln p\left(X'\right) \rangle_{X' \in D}$$

(9)

$$\Delta e_k \propto \langle \frac{\partial}{\partial e_k} \ln p\left(X'\right) \rangle_{X' \in D}$$

(10)

where D is a list of subgraphs (data graphs) available for learning. These update rules can be rewritten as

$$\Delta R_p \propto \langle e_s^T e_o \rangle_{\{s,p,o\} \in D} - \langle e_s^T e_o \rangle_{\{s,p,o\} \in S}$$

(11)

$$\Delta e_k \propto \langle R_p e_o \rangle_{\{k,p,o\} \in D} + \langle e_s^T R_p \rangle_{\{s,p,k\} \in D} - \langle R_p e_o \rangle_{\{k,p,o\} \in S} - \langle e_s^T R_p \rangle_{\{s,p,k\} \in S}$$

(12)

Relations learn to match the inner product of subject and object embeddings they occur with, while node embeddings learn to match the latent representation of their counterpart, e.g., $e_s$ learns to match the latent representation of the object $R_p e_o$ if the triple 's-p-o' is in the data. Both learning rules consist of two phases, a data-driven phase and a model-driven phase - similar to the wake-sleep algorithm used to train, e.g., Boltzmann machines. In contrast to the data-driven phase, during the model-driven phase, the likelihood of model-generated triples $S$ is reduced. Thus, different from graph embedding algorithms like RESCAL, no negative samples are required to train the model.

Sampling for triple-generation

To generate triples from the model, we use Markov Chain Monte Carlo (MCMC) sampling - more precisely, the Metropolis-Hastings algorithm - with negative sampling as the proposal distribution. For instance, if the triple $(s,p,o)$ is in the data set, we propose a new sample by randomly replacing either subject, predicate or object, and accepting the change with probability

$$T(\{s, p, o\} \rightarrow \{s, p, q\}) = max\left[1, exp\left(e_s^T R_p (e_q - e_o)\right)\right]$$

(13)

The transition probability directly depends on the distance between the embeddings, i.e., if the embeddings of nodes (or relations) are close to each other, a transition is more likely. This process can be repeated on the new sample to generate a chain of samples, exploring the neighborhood of the data triple under the model distribution. It can further be used to approximate conditional or marginal probabilities, e.g., by keeping the subject fixed and sampling over predicates and objects.

Network implementation

The described learning rules and sampling dynamics suggest a neural network structure with specific connectivity and neuron types as shown in Fig. 2 - 5. Entity embeddings $e_x$ are encoded by node embedding populations NEP of neurons N, i.e., each dimension of $e_x$ is represented by one neuron N in the node embedding population NEP. These project statically and pre-wired to stochastic, dendritic output neurons SDON, one for each relation type. Every stochastic, dendritic output neuron SDON integrates input using a structure resembling a dendritic tree, where each branch encodes a component of the relation embedding $R_p$. At each of these branches, triple-products of the form $e_{s,i} R_{p,ij} e_{o,j}$ are evaluated and subsequently integrated with contributions from other branches through the tree-like structure as shown in Fig. 3. The integrated input is then fed into an activation function AF

$$\sigma_\eta(x) = max\left(1, \frac{1}{\eta^2 + e^{-x}}\right)$$

(14)

with $\eta \in$ [-1,0,1]. Through $\eta$, the stochastic, dendritic output neurons SDON can both return the probability $\sigma(\cdot)$ of a triple statement to be true ($\eta = 0$) and the transition probabilities $T(\cdot)$ required for sampling ($\eta$ = -1 *or* 1).

Fig. 2 shows a schematic of the proposed network architecture for the learning component LC. The node embedding populations NEP connect statically to dendritic trees of the stochastic, dendritic output neurons SDON that implement the scoring function $\theta_{s,p,o}$. Inhibition IH between the stochastic, dendritic output neurons SDON can be used to ensure that only one triple is returned as output.

Fig. 3 depicts on of the stochastic, dendritic output neurons SDON. First, inputs are combined with weights stored in the branches to form triple-products, which are consequently summed up. The output can be interpreted as a prediction of the likelihood of a triple ($\eta = \pm 1$) or a transition probability that changes the network's state ($\eta = 0$).

Fig. 4 shows updates of node embeddings are transmitted using static feedback connections FC.

Fig. 5 shows updates of relation embeddings that only require information locally available in the stochastic, dendritic output neurons SDON.

$\eta$ is further used to gate between three different phases or modes for learning: the data-driven learning mode shown in Fig. 6 ($\eta = +1$), which allows a positive learning phase, the model-driven learning mode shown in Fig. 8 ($\eta = -1$), which allows a negative learning phase, and the sampling mode shown in Fig. 7 ($\eta = 0$), which is used for a free-running phase - which is reflected in the learning rules by adding $\eta$ as a multiplicative factor (see equations in Fig. 4 and 5). In the data-driven learning mode shown in Fig. 6, data is presented to the network for the duration of a positive learning phase. In the sampling mode shown in Fig. 7, triples are sampled from the model during a sampling phase, 'reasoning' about alternative triple statements starting with the training data. The generated samples are then replayed to the network during a negative learning phase in the model-driven learning mode shown in Fig. 8. Both during the positive learning phase shown in Fig. 6 and the negative learning phase shown in Fig. 8, for each triple *'s - p - o'* parameter updates are calculated

$$\Delta R_p \propto \eta \cdot s\left(\theta_{s,p,o}\right)e_s^T e_o$$

(15.1)

$$\Delta e_s \propto \eta \cdot s\left(\theta_{s,p,o}\right)R_p e_o$$

(15.2)

$$\Delta e_o \propto \eta \cdot s\left(\theta_{s,p,o}\right)e_s^T R_p$$

(15.3)

where updates are only applied when the stochastic, dendritic output neuron SDON 'spiked', i.e., sampling $\sigma(\theta_{s,p,o})$ returns $s(\theta_{s,p,o}) = 1$.

In this architecture, the learning rule Eq. (11) takes the form of a contrastive Hebbian learning rule and Eq. (12) of a contrastive predictive learning rule. To update the embeddings of the node embedding populations NEP, feedback signals have to be sent from the stochastic, dendritic output neurons SDON to the neurons N - which can be done through a pre-wired feedback structure due to the simple and static forward connectivity, as shown in Fig. 4. To update relational weights, only local information is required that is available to the dendrites, as shown in Fig. 5.

Input is presented to the network by selecting the according node embedding populations NEP and stochastic, dendritic output neurons SDON, which can be achieved through inhibitory gating, resembling a 'memory recall' of learned concepts. Alternatively, the learned embeddings of concepts could also be interpreted as attractor states of a memory network. During the sampling phase, feedback from the stochastic, dendritic output neurons SDON (Eq. (13)) is used to decide whether the network switches to another memory (or attractor state).

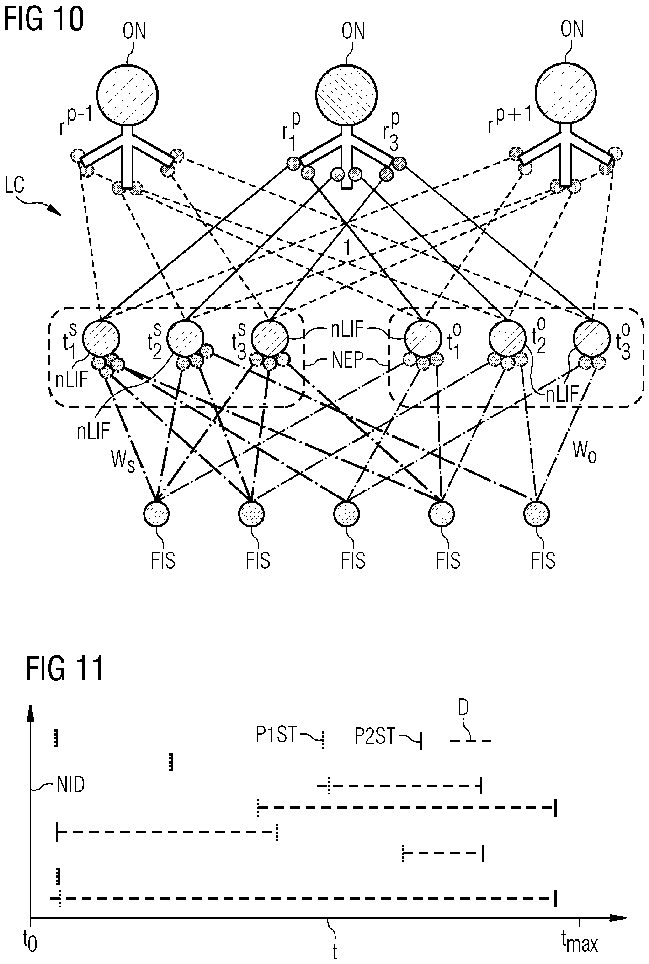

Fig. 10 shows another embodiment of the learning component LC, which is a spike-based neural network architecture. Fixed input spikes FIS are provided by an input population of neurons as temporal events and fed to node embedding populations NEP through trainable weights, leading to embedding spike times. The node embedding populations NEP form together with the trainable weights an input layer or embedding layer and contain non-leaky integrate-and-fire neurons nLIF, which will be described in more detail in later embodiments, and which each create exactly one spike, i.e., a discrete event in time, to encode node embeddings. By modifying the weights connecting the fixed input spikes FIS to the non-leaky integrate-and-fire neurons nLIF, the embedding spike times can be changed. Furthermore, the non-leaky integrate-and-fire neurons nLIF are connected to output neurons ON.

Both the forward inference path and the learning path only require spike times and utilize a biologically inspired neuron model found in the current generation of neuromorphic, spike-based processors, as will be described with more detail in later embodiments. Furthermore, similarly to the previous embodiments, static feedback connections between the node embedding populations NEP and the output neurons ON are utilized to transmit parameter updates. Different from the previous embodiments, no probabilistic sampling is performed by the system.

Fig. 11 shows first spike times P1ST of a first node embedding population and second spike times P2ST of a second node embedding population. In this example, each node embedding population consists of eight non-leaky integrate-and-fire neurons nLIF, which are sorted on a vertical axis according to their neuron identifier NID. The respective spike times are shown on a horizontal time axis t.

Fig. 11 shows a periodically repeating time interval beginning with $t_0$ and ending with $t_{max}$. Within the time interval, the spike time of each non-leaky integrate-and-fire neuron nLIF represents a value (e.g. vector component) in the node embedding of the node that is embedded by the respective node embedding population. In other words, the node embedding is given by the spike time pattern of the respective node embedding population. From the patterns visible in Fig. 11, it is quite clear that the first spike times P1ST are different from the second spike times P2ST, which means that the first node embedding population and the second node embedding population represent different nodes (entities). A relation between these nodes can be decoded with a decoder D as shown in Fig. 11, since relations are encoded by spike-time difference patterns between two populations. The output neurons ON shown in Fig. 10 act as spike-time difference detectors. The output neurons ON store relation embeddings that learn to decode spike time patterns. In other words, the input layer encodes entities into temporal spike time patterns, and the output neurons ON learn to decode these patterns for the according relations.

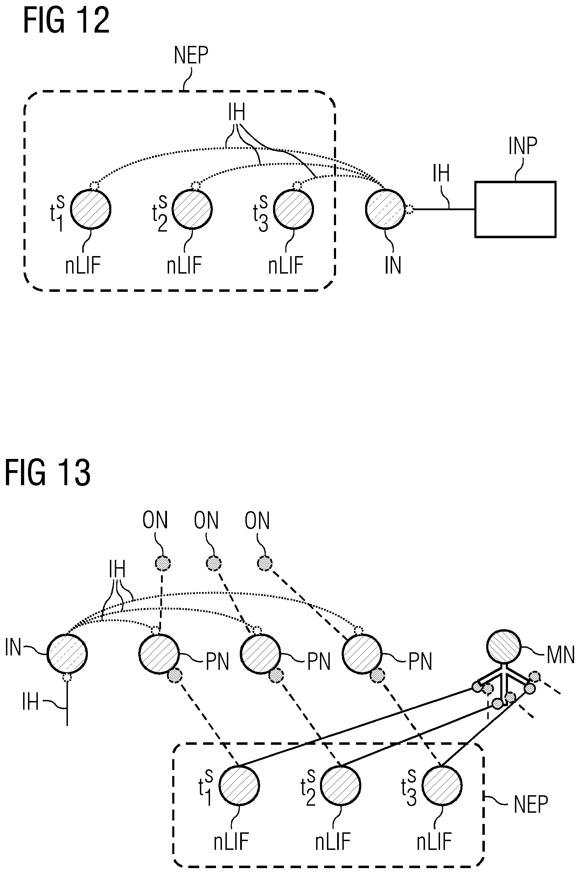

To select node embedding populations NEP, for example the two active node embedding populations NEP shown in Fig. 10, we use a disinhibition mechanism as shown in Fig. 12. Here, one of the node embedding populations NEP is shown with its non-leaky integrate-and-fire neurons nLIF. By default, a constantly active inhibitory neuron IN silences the non-leaky integrate-and-fire neuron nLIF with inhibition IH. Via external input INP acting as inhibition IH, the inhibiting neuron IN can be inhibited, releasing the node embedding populations NEP to freely spike.

Fig. 13 shows a similar 'gating' mechanism that can be introduced to, e.g., monitor a triple statement encoded in the learning component LC all the time: by using parrot neurons PN that simply mimic their input, the inhibition IH can be applied to the parrot neuron PN while the non-leaky integrate-and-fire neurons nLIF of the node embedding populations NEP are connected to monitoring neurons MN which are new, additional output neurons that monitor the validity of certain triple statements all the time. For example, during learning, the statement 'temperature_sensor has_reading elevated' might become valid, even though we do not encounter it in the data stream. These monitoring neurons MN have to be synchronized with the output neurons ON, but this is possible on a much slower time scale than learning happens. By extending the learning component LC using parrot neurons PN, continuous monitoring can be realized.

For the following embodiments, numbering of the equations will begin new.

In the following, we explain our spike-based graph embedding model (SpikE) and derive the required learning rule.

Spike-based graph embeddings

From graphs to spikes:

Our model takes inspiration from TransE, a shallow graph embedding algorithm where node embeddings are represented as vectors and relations as vector translations (see Section "Translating Embeddings" for more details). In principle, we found that these vector representations can be mapped to spike times and translations into spike time differences, offering a natural transition from the graph domain to SNNs.

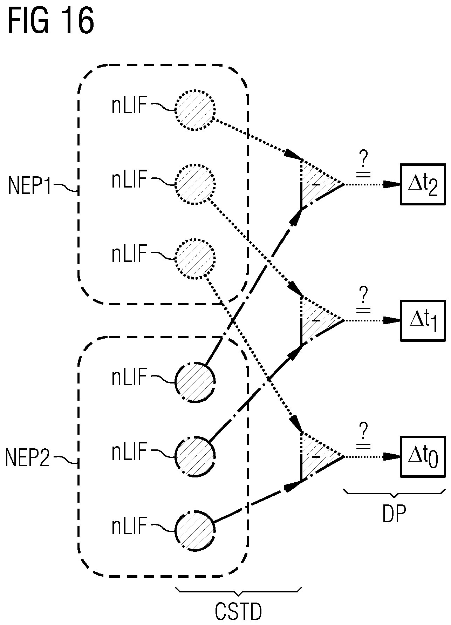

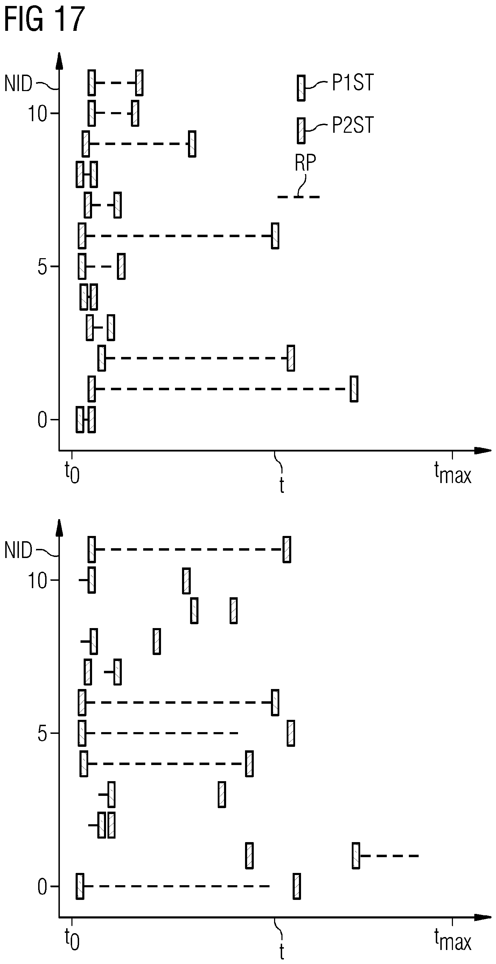

We propose that the embedding of a node s is given by single spike times of a first node embedding population NEP1 of size $N, t_s \in [t_0, t_{max}]^N$ as shown in Fig. 16. That is, every non-leaky integrate-and-fire neuron nLIF of the first node embedding population NEP1 emits exactly one spike during the time interval $[t_0, t_{max}]$ shown in Fig. 17, and the resulting spike pattern represents the embedding of an entity in the knowledge graph. Relations are encoded by an $N$ dimensional vector of spike time differences $r_p$. To decode whether two populations s and o encode entities that are connected by relation p, we evaluate the spike time differences of both populations element-wise, $t_s$-$t_o$, and compare it to the entries of the relation vector $r_p$. Depending on how far these diverge from each other, the statement 's - p - o' is either deemed implausible or plausible. Fig. 16 shows this element-wise evaluation as a calculation of spike time differences CSTD between the first node embedding population NEP1 and a second node embedding population NEP2, followed by a pattern decoding step DP which compares the spike time differences to the entries of the relation vector $r_p$.

In other words, Fig 16. shows a spike-based coding scheme to embed graph structures into SNNs. A first node is represented by the first node embedding population NEP1, and a second node is represented by a second node embedding population NEP2. The embedding of the first node is given by the individual spike time of each neuron nLIF in the first node embedding population NEP1. The embedding of the second node is given by the individual spike time of each neuron nLIF in the second node embedding population NEP2. After the calculation of spike time differences CSTD, the learning component evaluates in a pattern decoding step DP whether certain relations are valid between the first node and the second node.

Fig. 17 shows an example of spike patterns and spike time differences for a valid triple statement (upper section) and an invalid triple statement (lower section), i.e., where the pattern does not match the relation. In both cases, we used the same subject, but different relations and objects. The upper section of Fig. 17 shows that first spike times P1ST (of a first node embedding population) encoding a subject entity in a triple statement and second spike times P2ST (of a second node embedding population) encoding an object entity in that triple statement are consistent with a representation RP of the relation of that triple statement, i.e., $t_s - t_o \approx r_p$. In the lower section of Fig. 17, we choose a triple statement that is assessed as implausible by our model, since the measured spike time differences do not match those required for relation p (although it might match other relations q not shown here).

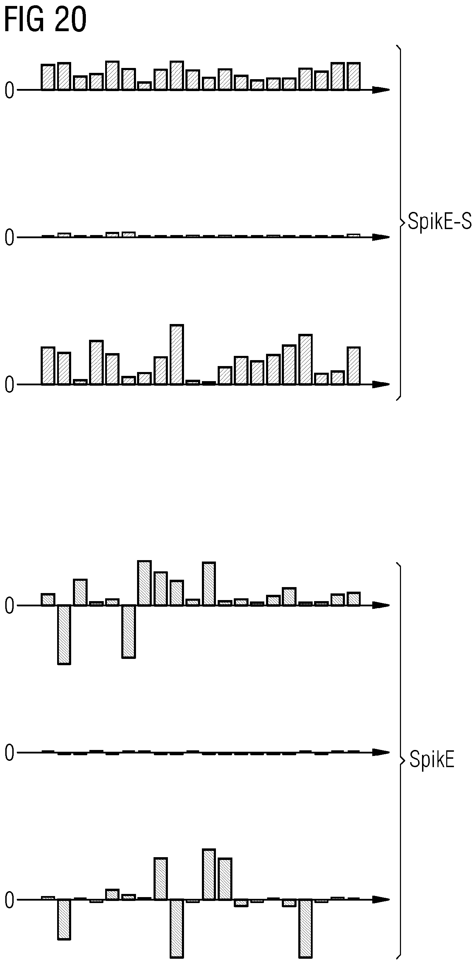

This coding scheme maps the rich semantic space of graphs into the spike domain, where the spike patterns of two populations encode how the represented entities relate to each other, but not only for one single relation $p$, but the whole set of relations spanning the semantic space. To achieve this, learned relations encompass a range of patterns from mere coincidence detection to complex spike time patterns. In fact, coding of relations as spike coincidence detection does naturally appear as a special case in our model when training SNNs on real data, see for instance Fig. 20. Such spike embeddings can either be used directly to predict or evaluate novel triples, or as input to other SNNs that can then utilize the semantic structure encoded in the embeddings for subsequent tasks.

Formally, the ranking of triples can be written as

$$\vartheta_{s,p,o} = \sum ||d(t_s, t_o) - r_p||$$

(1)

where $d$ is the distance between spike times and the sum is over vector components. In the remaining document, we call $\vartheta_{s,p,o}$ the score of triple ($s,p,o$), where valid triples have a score close to 0 and invalid ones >> 0. We define the distance function for SpikE to be

$$d_A(t_s, t_o) = t_s - t_o$$

(2)

where both the order and distance of spike times are used to encode relations. The distance function can be modified to only incorporate spike time differences,

$$d_S(t_s, t_o) = ||t_s - t_o||$$

(3)

such that there is no difference between subject and object populations. We call this version of the model Spike-S.

Network implementation:

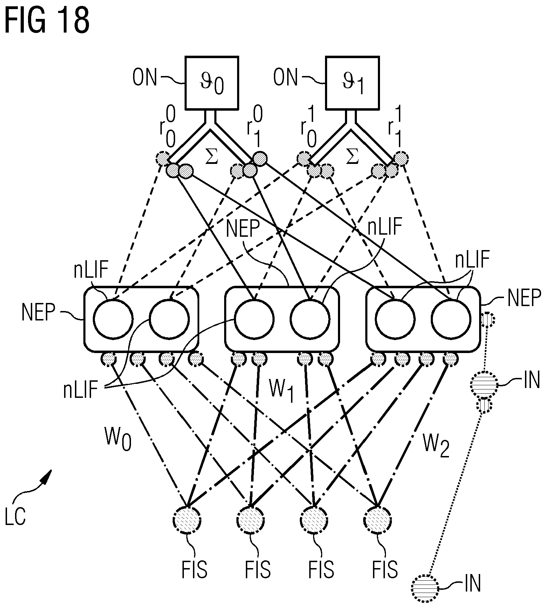

Fig. 18 shows an embodiment of the learning component LC, which can be implemented as any kind of neuromorphic hardware, showing fixed input spikes FIS, plastic weights $W_0$, $W_1$, $W_2$ encoding the spike times of three node embedding populations NEP, each containing two non-leaky integrate-and-fire neurons nLIF, which statically project to dendritic compartments of output neurons ON. To score triples, the adequate node embedding populations NEP are activated using, e.g., a disinhibition mechanism implemented by two concatenated inhibiting neurons IN.

A suitable neuron model that suffices the requirements of the presented coding scheme, i.e., single-spike coding and being analytically treatable, is the nLIF neuron model. For similar reasons, it has recently been used in hierarchical networks utilizing spike-latency codes. For the neuron populations encoding entities (the node embedding populations), we use the nLIF model with an exponential synaptic kernel

$$\dot{u}_{s,i}(t) = \frac{1}{\tau_s} \sum_j W_{s,ij}\, \theta(t - t_j) exp\left(-\frac{t - t_j}{\tau_s}\right)$$

(4)

where $u_{s,i}$ is the membrane potential of the $i$th neuron of population $s$, $\tau_s$ the synaptic time constant and $\theta(\cdot)$ the Heaviside function. A spike is emitted when the membrane potential crosses a threshold value $u_{th}$. $W_{s,ij}$ are synaptic weights from a pre-synaptic neuron population, with every neuron $j$ emitting a single spike at fixed time $t_j$ (Fig. 18, fixed input spikes FIS). This way, the coding in both stimulus and embedding layers are consistent with each other and the embedding spike times can be adjusted by changing synaptic weights $W_{s,ij}$

Eq. (4) can be solved analytically

$$u_{s,i}(t) = \sum_{t_j \leq t} W_{s,ij} \left[ 1 - exp\left( -\frac{t - t_j}{\tau_s} \right) \right]$$

(5)

which is later used to derive a learning rule for the embedding populations.

For relations, we use output neurons ON. Each output neuron ON consists of a 'dendritic tree', where branch $k$ evaluates the $k$th component of the spike pattern difference, i.e., $\|d(t_s, t_o) - r_p\|_k$, and the tree structure subsequently sums over all contributions, giving $\vartheta_{s,p,o}$ (Fig. 18, output neurons ON) 2. This way, the components of $r_p$ become available to all entity populations, despite being locally stored.

Different from ordinary feedforward or recurrent SNNs, the input is not given by a signal that first has to be translated into spike times and is then fed into the first layer (or specific input neurons) of the network. Instead, inputs to the network are observed triples 's - p - o', i.e., statements that have been observed to be true. Since all possible entities are represented as neuron populations, the input simply gates which populations become active (Fig. 18, inhibiting neurons IN), resembling a memory recall. During training, such recalled memories are then updated to better predict observed triples. Through this memory mechanism, an entity $s$ can learn about global structures in the graph. For instance, since the representation of a relation $p$ contains information about other entities that co-occur with it in triples, 'm - p - n', $s$ can learn about the embeddings of $m$ and $n$ (and vice versa) - even if $s$ never appears with $n$ and $m$ in triples together.

Learning rules:

To learn spike-based embeddings for entities and relations, we use a soft margin loss

$$l_{s,p,o} = \log\left[ 1 + exp\left( \vartheta_{s,p,o} \cdot \eta_{s,p,o} \right) \right]$$

(6a)

$$L(\vartheta, \eta) = \sum_{s,p,o} l_{s,p,o}$$

(6b)

where $\eta_{s,p,o} \in \{1,-1\}$ is a modulating teaching signal that establishes whether an observed triple 's - p - o' is regarded as valid ($\eta_{s,p,o} = 1$) or invalid ($\eta_{s,p,o} = -1$). This is required to avoid collapse to zero-embeddings that simply score all possible triples with 0. In the graph embedding literature, invalid examples are generated by corrupting valid triples, i.e., given a training triple 's - p - o', either $s$ or $o$ are randomly replaced - a procedure called 'negative sampling'.

The learning rules are derived by minimizing the loss Eq. (6b) via gradient descent. In addition, we add a regularization term to the weight learning rule that counters silent neurons. The gradient for entities can be separated into a loss-dependent error and a neuron-model-specific term

$$\frac{\partial l_{s,p,o}}{\partial W_{s,ik}} = \frac{\partial l_{s,p,o}}{\partial t_{s,i}} \frac{\partial t_{s,i}}{\partial W_{s,ik}}$$

(7)

while the gradient for relations only consists of the error $\frac{\partial l_{s,p,o}}{\partial r_p}$. The error terms are given by (see section "Spike-based model")

$$\frac{\partial l_{s,p,o}}{\partial t_s} = \epsilon_{s,p,o} \cdot sign\big(d_A(t_s, t_o) - r_p\big)$$

(8a)

$$\epsilon_{s,p,o} = \eta_{s,p,o} \cdot \sigma\big(\vartheta_{s,p,o} \cdot \eta_{s,p,o}\big)$$

(8b)

$$\frac{\partial l_{s,p,o}}{\partial t_o} = \frac{\partial l_{s,p,o}}{\partial r_p} = -\frac{\partial l_{s,p,o}}{\partial t_s}$$

(8c)

for SpikE and

$$\frac{\partial l_{s,p,o}}{\partial t_s} = \epsilon_{s,p,o} \cdot sign(t_s - t_o) sign\big(d_S(t_s, t_o) - r_p\big)$$

(9a)

$$\frac{\partial l_{s,p,o}}{\partial t_o} = -\frac{\partial l_{s,p,o}}{\partial t_s}$$

(9b)

$$\frac{\partial l_{s,p,o}}{\partial r_p} = -\epsilon_{s,p,o} \cdot sign\big(d_S(t_s, t_o) - r_p\big)$$

(9c)

for SpikE-S, where $\sigma(\cdot)$ is the logistic function.

The neuron-specific term can be evaluated using Eq. (5), resulting in (see section "Spike-based model")

$$\frac{\partial t_{s,i}}{\partial W_{s,ik}} = \frac{\tau_S \theta\big(t_{s,i} - t_k\big)\big(e^{(t_k - t_{s,i})/\tau_S} - 1\big)}{\sum_{t_j \leq t_{s,i}} W_{s,ij} - u_{th}}$$

(10)

For relations, all quantities in the update rule are accessible in the output neuron ON. Apart from an output error, this is also true for the update rules of nLIF spike times. Specifically, the learning rules only depend on spike times - or rather spike time differences - pre-synaptic weights and neuron-specific constants, compatible with recently proposed learning rules for SNNs.

Experiments

Data:

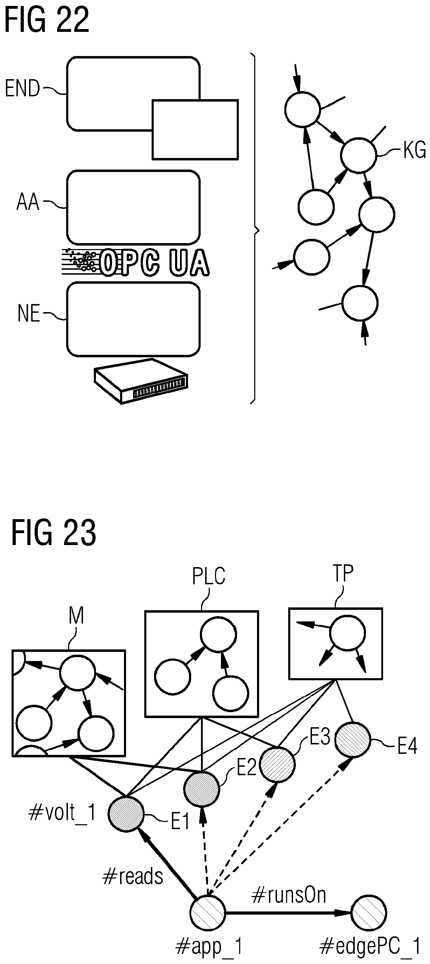

Fig. 22 shows an industrial system used as a data source. Static engineering data END, for example the static sub-graph SSG described with regard to Fig. 1, dynamic application activity AA and network events NE, for example the raw data RD described with regard to Fig. 1, are integrated in a knowledge graph KG in order to be processed by the learning component.

To evaluate the performance of the spike-based model, we generated graph data from an industrial automation system as shown in Fig. 22. The industrial automation system itself is composed of several components like a conveyor belt, programmable logic controllers (PLCs), network interfaces, lights, a camera, sensors, etc. Software applications hosted on edge computers can interact with the industrial automation system by accessing data from the PLC controllers. In addition, system components can also interact with each other through an internal network or access the internet. These three domains - industrial machine specifications, network events and app data accesses - are integrated in the knowledge graph KG that we use for training and testing.

For the following experiments, we use a recording from the industrial automation system with some default network and app activity, resulting in a knowledge graph KG with 3529 nodes, 11 node types, 2 applications, 21 IP addresses, 39 relations, 360 network events and 472 data access events. We randomly split the graph with a ratio of 8/2 into mutually exclusive training and test sets, resulting in 12399 training and 2463 test triples.

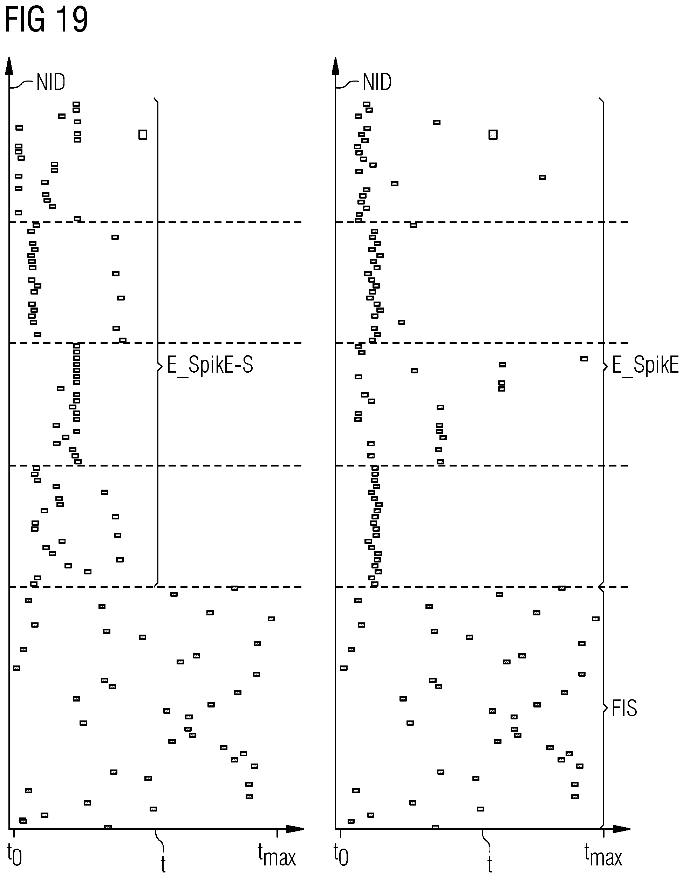

Fig. 19 shows fixed input spikes FIS and first examples E_SpikeE-S of learned spike time embeddings for SpikE-S and second examples E_SpikE of learned spike time embeddings for SpikE. The examples are plotted along a horizontal time axis t and a vertical axis for a neuron identifier NID.

Fig. 20 shows learned relation embeddings in the output neurons. In case of SpikE-S, only positive spike time differences are learned. In both cases, complex spike difference patterns are learned to encode relations as well as simpler ones that mostly rely on coincidence detection (middle), i.e., $r_p \approx 0$.

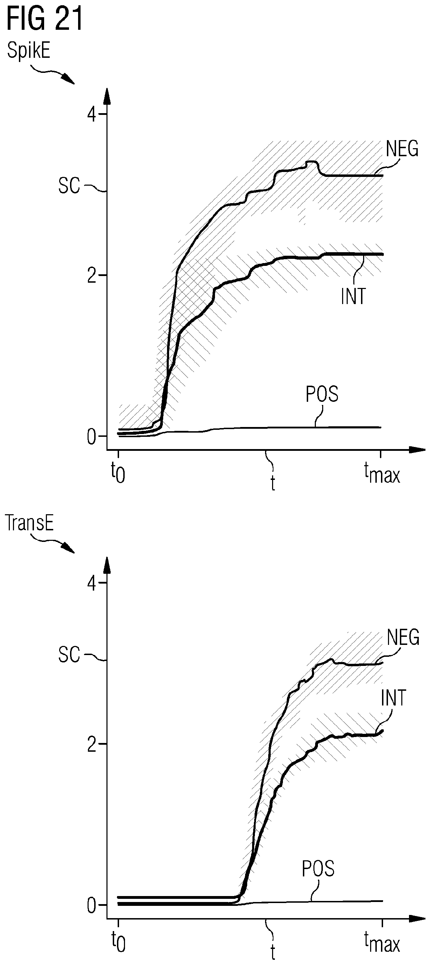

Fig. 21 shows a temporal evaluation of triples 's - p - o', for varying degrees of plausibility of the object. A positive triple POS has been seen during training, an intermediate triple INT has not seen during training, but is plausible, and a negative triple NEG is least plausible (see also Fig. 23 for a similar experiment). Different to TransE that lacks a concept of time, SpikE prefers embeddings where most neurons spike early, allowing faster evaluation of scores. Lines show the mean score and shaded areas mark the 15th and 85th percentile for 10 different random seeds.

Fig. 23 shows an anomaly detection task where an application is reading data from an industrial system. There are various ways how data variables accessed during training are connected to other data variables in the industrial system. For instance, they might be connected through internal structures documented in engineering data of a machine M, accessible from the same industrial controller PLC or only share type-based similarities TP. In order to support context-aware decision making, the learning component is applied to an anomaly detection task, where an application reads different data variables from the industrial system during training and test time. During training of the learning component, the application only reads data from a first entity E1, but not from a second entity E2, a third entity E3 and a fourth entity E4.

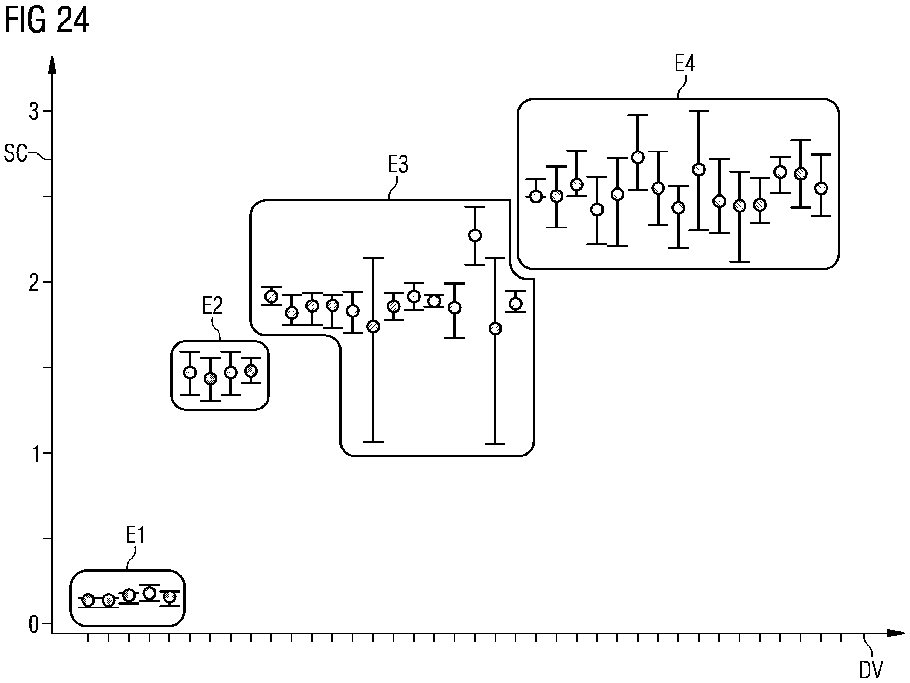

Fig. 24 shows scores SC generated by the learning component for the anomaly detection task regarding data events where the application shown in Fig. 23 accesses different data variables DV. The scores are grouped for the first entity E1, the second entity E2, the third entity E3 and the fourth entity E4. As expected, the less related data variables DV are to the ones read during training, the worse the score of events where #app_1 accesses them. Here, a second application hosted from a different PC is active as well, which regularly reads two data variables from the third entity E3 with high uncertainty, i.e., the embedding of #app_1 also learns about the behavior of #app_2. As expected from graph-based methods, the learning component is capable of producing graded scores for different variable accesses by taking into account contextual information available through the structure of the knowledge graph.

We present a model for spike-based graph embeddings, where nodes and relations of a knowledge graph are mapped to spike times and spike time differences in a SNN, respectively. This allows a natural transition from symbolic elements in a graph to the temporal domain of SNNs, going beyond traditional data formats by enabling the encoding of complex structures into spikes. Representations are learned using gradient descent on an output cost function, which yields learning rules that depend on spike times and neuron-specific variables.

In our model, input gates which populations become active and consequently updated by plasticity. This memory mechanism allows the propagation of knowledge through all neuron populations - despite the input being isolated triple statements.

After training, the learned embeddings can be used to evaluate or predict arbitrary triples that are covered by the semantic space of the knowledge graph. Moreover, learned spike embeddings can be used as input to other SNNs, providing a native conversion of data into spike-based input.

The nLIF neuron model used in this embodiment is well suited to represent embeddings, but it comes with the drawback of a missing leak term, i.e., the neurons are modeled as integrators with infinite memory. This is critical for neuromorphic implementations, where - most often - variations of the nLIF model with leak are realized. Gradient-based optimization of current-based LIF neurons, i.e., nLIF with leak, can be used in alternative embodiments, making them applicable to energy-efficient neuromorphic implementations. Moreover, output neurons take a simple, but function-specific form that is different from ordinary nLIF neurons. Although realizable in neuromorphic devices, we believe that alternative forms are possible. For instance, each output neuron might be represented by a small forward network of spiking neurons, or relations could be represented by learnable delays.

Finally, the presented results bridge the areas of graph analytics and SNNs, promising exciting industrial applications of event-based neuromorphic devices, e.g., as energy efficient and flexible processing and learning units for online evaluation of industrial graph data.

METHODS

Translating embeddings

In TransE, entities and relations are embedded as vectors in an N-dimensional vector space. If a triple *'s - p - o'* is valid, then subject $e_s$ and object $e_o$ vectors are connected via the relation vector $r_p$, i.e., relations represent translations between subjects and objects in the vector space

$$e_s + r_p \approx e_o$$

(11)

In our experiments, similar to SpikE, we use a soft margin loss to learn the embeddings of TransE.

Spike-based model

Spike time gradients:

The gradients for $d_s$ can be calculated as follows

$$\frac{\partial l_{s,p,o}}{\partial t_s} = \frac{\partial l_{s,p,o}}{\partial \vartheta_{s,p,o}} \frac{\partial \vartheta_{s,p,o}}{\partial d_s} \frac{\partial d_s}{\partial t_s}$$

(12)

with

$$\frac{\partial l_{s,p,o}}{\partial \vartheta_{s,p,o}} = \eta_{s,p,o} \cdot \sigma\big(\vartheta_{s,p,o} \cdot \eta_{s,p,o}\big)$$

(13a)

$$\frac{\partial \vartheta_{s,p,o}}{\partial d_s} = sign\big(d_s(t_s, t_o) - r_p\big)$$

(13b)

$$\frac{\partial d_s}{\partial t_s} = sign(t_s - t_o)$$

(13c)

All other gradients can be obtained similarly.

Weight gradients:

The spike times of nLIF neurons can be calculated analytically by setting the membrane potential equal to the

spike threshold $u_{th}$, i.e., $u_{s,i}(t^*) \overset{!}{=} u_{th}$:

$$t^* = \tau_S \ln \left( \underbrace{\frac{\sum_{t_j \le t^*} W_{s,ij} e^{t_j/\tau_S}}{\sum_{t_j \le t^*} W_{s,ij} - u_{th}}}_{T^*} \right)$$

(14)

In addition, for a neuron to spike, three additional conditions have to be met:

- the neuron has not spiked yet,
- the input is strong enough to push the membrane potential above threshold, i.e.,

$$\sum_{t_j \le t^*} W_{s,ij} > u_{th}$$

(15)

the spike occurs before the next causal pre-synaptic spike $t_c$

$$t^* < t_c$$

(16)

From this, we can calculate the gradient

$$\frac{\partial t^*}{\partial W_{s,ik}} = \frac{\tau_S}{T^*} \cdot \frac{\partial T^*}{\partial W_{s,ik}}$$

(17a)

$$= \frac{\tau_S \theta(t^* - t_k)}{T^*} \left[ \frac{e^{t_k/\tau_S}}{\sum_{t_j \le t^*} W_{s,ij} - u_{th}} - \frac{T^*}{\sum_{t_j \le t^*} W_{s,ij} - u_{th}} \right]$$

(17b)

$$= \frac{\tau_S \theta(t^* - t_k)}{\sum_{t_j \le t^*} W_{s,ij} - u_{th}} \left[ exp \left( \frac{t_k - t^*}{\tau_S} \right) - 1 \right]$$

(17c)

where we used that $T^* = exp \left( \frac{t^*}{\tau_S} \right)$.

Regularization of weights:

To ensure that all neurons in the embedding populations spike, we use the regularization term $L_\delta$

$$L_\delta = \begin{cases} \sum_{s,i} \delta \cdot \left(u_{th} - w_{s,i}\right) & \text{if } w_{s,i} \le u_{th}\,, \\ 0 & \text{otherwise}\,, \end{cases}$$

(18)

with $w_{s,i} = \sum_j W_{s,ij}$.

Alternative gating

As was shown in Fig. 13 and discussed above, separate gating of a node embedding population NEP can be realized using parrot neurons PN that immediately transmit their input, acting like relay lines. Instead of gating the node embedding populations NEP themselves, the parrot populations can be gated. This further allows the evaluation of relations that target the same subject and object population.

Synchronizing subject and object population

If an entity is represented by distinct subject *s* and object *o* populations, these representations will differ after training - although they represent the same entity. By adding triples of the form *'s - #isIdenticalTo - o'* and keeping $r_{isIdenticalTo}$ = 0, further alignment can be enforced that increases performance during training.
The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

**Claims**

1. Industrial device (ED) for building and/or processing a knowledge graph (KG),

   - with at least one sensor (S) and/or at least one data source (DS) configured for providing raw data (RD),
   - with an ETL component (ETLC), configured for converting the raw data (RD) into triple statements (T), using mapping rules (MR),
   - with a triple store (ETS), storing the triple statements (T) as a dynamically changing knowledge graph (KG),
   - with a learning component (LC), configured for processing the triple statements (T) in a learning mode, and for performing an inference (IF) in an inference mode, and
   - with a control component (CC), configured for switching between different modes of operation of the learning component (LC).

2. The industrial device (ED) according to claim 1,

   - wherein the learning component (LC) and/or the control component (CC) implement a RESCAL algorithm, a TransE algorithm, a DistMult algorithm, or a Graph convolutional neural network.

3. The industrial device (ED) according to claim 1 or 2,

   - wherein the industrial device (ED) is a field device, an edge device, a sensor device, an industrial controller, in particular a PLC controller, an industrial PC implementing a SCADA system, a network hub, a network switch, in particular an industrial ethernet switch, or an industrial gateway connecting an automation system to cloud computing resources.

4. The industrial device (ED) according to any of the preceding claims,

   - wherein the control component (CC) is autonomous or processing external signals.

5. The industrial device (ED) according to any of the preceding claims,

   - wherein the learning component (LC) is configured for calculating a likelihood of a triple statement during inference mode.

**6.** The industrial device (ED) according to any of the preceding claims,

- wherein the triple store (ETS) also stores a pre-loaded static sub-graph (SSG).

**7.** The industrial device (ED) according to any of the preceding claims,

- with a statement handler (SH), configured for triggering an automated action based on the inference (IF) of the learning component (LC).

**8.** The industrial device (ED) according to any of the preceding claims,

- wherein the knowledge graph (KG) is an industrial knowledge graph describing parts of an industrial system,
- with nodes of the knowledge graph (KG) representing physical objects, in particular sensors, industrial controllers, robots, drives, manufactured objects, tools and/or elements of a bill of materials, and
- with nodes of the knowledge graph (KG) representing abstract entities, in particular attributes, configurations or skills of the physical objects, production schedules and plans, and/or sensor measurements.

**9.** The industrial device (ED) according to any of the preceding claims,

- wherein the learning component (LC) and/or the control component (CC) are implemented as neuromorphic hardware, in particular as an application specific integrated circuit, a field-programmable gate array, a wafer-scale integration, a hardware with mixed-mode VLSI neurons, or a neuromorphic processor, in particular a neural processing unit or a mixed-signal neuromorphic processor.

**10.** The industrial device (ED) according to any of the preceding claims,

- wherein the learning component (LC)
consists of

- an input layer containing node embedding populations (NEP) of neurons (N), with each node embedding populations (NEP) representing an entity contained in the triple statements (T), and
- an output layer, containing output neurons (SDON) configured for representing a likelihood for each possible triple statement,

and models a probabilistic, sampling-based model derived from an energy function, wherein the triple statements (T) have minimal energy, and
- wherein the control component (CC) is configured for switching the learning component (LC)

- into a data-driven learning mode, configured for training the component (LC) with a maximum likelihood learning algorithm minimizing energy in the probabilistic, sampling-based model, using only the triple statements (T), which are assigned low energy values,
- into a sampling mode, in which the learning component (LC) supports generation of triple statements, and
- into a model-driven learning mode, configured for training the component (LC) with the maximum likelihood learning algorithm using only the generated triple statements, with the learning component (LC) learning to assign high energy values to the generated triple statements.

**11.** The industrial device (ED) according to claim 10,

- wherein the control component (CC) is configured to alternatingly

- present inputs to the learning component (LC) by selectively activating subject and object populations among the node embedding populations (NEP),
- set hyperparameters of the learning component (LC), in particular a factor ($\eta$) that modulates learning updates (LU) of the learning component (LC),
- read output of the learning component (LC), and
- use output of the learning component (LC) as feedback to the learning component (LC).

**12.** The industrial device (ED) according to claim 10 or 11,

- wherein the output layer has one output neuron (SDON) for each possible relation type of the knowledge graph (KG) .

13. The industrial device (ED) according to claim 12,

- wherein the output neurons (SDON) are stochastic dendritic output neurons, storing embeddings of relations that are given between a subject and an object in the triple statements (T) in their dendrites, summing all dendritic branches into a final score, which is transformed into a probability using an activation function (AF) .

14. The industrial device (ED) according to claim 13,

- wherein depending on the mode of the learning component (LC), an output of the activation function (AF) is a prediction of the likelihood of a triple statement or a transition probability.

15. The industrial device (ED) according to claim 13 or 14,

- wherein learning updates (LU) for relation embeddings are computed directly in dendritic trees of the stochastic, dendritic output neurons (SDON).

16. The industrial device (ED) according to any of the claims 10 - 15,

- wherein learning updates (LU) for entity embeddings are computed using static feedback connections (FC) from each output neuron (SDON) to neurons (N) of the node embedding populations (NEP).

17. The industrial device (ED) according to any of the claims 10 - 16,

- wherein in the sampling mode, by sampling from the activation function (AF), a binary output signals to the control component (CC) whether a triple statement is accepted.

18. The industrial device (ED) according to any of the claims 10 - 17,

- wherein the learning component (LC) includes first neurons forming a first node embedding population (NEP1), representing a first entity contained in the triple statements (T) by first spike times (P1ST) of the first neurons during a recurring time interval,
- wherein the learning component (LC) includes second neurons forming a second node embedding population (NEP2), representing a second entity contained in the triple statements (T) by second spike times (P2ST) of the second neurons during the recurring time interval, and
- wherein a relation between the first entity and the second entity is represented as the differences between the first spike times (P1ST) and the second spike times (P2ST).

19. The industrial device (ED) according to claim 18,

- wherein the differences between the first spike times (P1ST) and the second spike times (P2ST) consider an order of the first spike times (P1ST) in relation to the second spike times (P2ST), or
- wherein the differences are absolute values.

20. The industrial device (ED) according to claim 18 or 19,

- wherein the relation is stored in one of the output neurons, and
- wherein the relation is in particular given by vector components that are stored in dendrites of the output neuron.

21. The industrial device (ED) according to any of the claims 18 - 20,

- wherein the first neurons are connected to a monitoring neuron (MN),
- wherein each first neuron is connected to a corresponding parrot neuron (PN),
- wherein the parrot neurons (PN) are connected to the output neurons, and
- wherein the parrot neurons (PN) are connected to an inhibiting neuron (IN).

**22.** The industrial device (ED) according to any of the claims 18 - 21,

- wherein the first neurons and the second neurons are spiking neurons, in particular non-leaky integrate-and-fire neurons (nLIF) or current-based leaky integrate-and-fire neurons.

**23.** The industrial device (ED) according to any of the claims 18 - 22,

- wherein each of the first neurons and second neurons only spikes once during the recurring time interval, or
- wherein only a first spike during the recurring time interval is counted.

**24.** The industrial device (ED) according to any of the claims 10 - 23,

- wherein each node embedding population (NEP) is connected to an inhibiting neuron (IN), and therefore selectable by inhibition of the inhibiting neuron (IN).

**25.** Method for building and/or processing a knowledge graph (KG), comprising the following operations performed by an industrial device (ED):

- providing, by at least one sensor (S) and/or at least one data source (DS) raw data (RD),
- converting, by an ETL component (ETLC), the raw data (RD) into triple statements (T), using mapping rules (MR) ,
- storing, by a triple store (ETS), the triple statements (T) as a dynamically changing knowledge graph (KG),
- processing, by a learning component (LC), the triple statements (T) in a learning mode,
- switching, by a control component (CC), operation of the learning component (LC) from the learning mode to an inference mode, and
- performing, by the control component (CC), an inference (IF) in the inference mode.

FIG 1

# FIG 2

EP 4 030 351 A1

## FIG 3

$$\sigma_\eta(u) \sim \max\left(1, \frac{1}{\eta^2 + e^{-u}}\right)$$ — AF

SDON

R

$$e_1^S R_1^p e_1^o$$

SM

$$\sum_{i=1} e_i^S R_i^p e_i^o$$

S

R

R

R

R

$$e_1^S$$

$$e_1^o$$

$$e_2^S$$

$$e_2^o$$

$$e_3^S$$

$$e_3^o$$

## FIG 4

SDON

$$\Delta e_1^S = \eta R_1^p e_1^o$$

FC

LQ

N

FC

FC

1

1

1

N

LQ

LQ

$$e_1^S$$

$$e_2^S$$

$$e_3^S$$

N

N

NEP

## FIG 5

$$\Delta R_1^p = \eta e_1^s e_1^o$$

SDON

$e_1^s$

$e_1^o$

$e_2^s$

$e_2^o$

$e_3^s$

$e_3^p$

## FIG 6

0    EI    1    IH    0

LC

IH

SDON    SDON    SDON

NEP

N    N    N    N    N    N

FIG 7

FIG 8

# FIG 9

## FIG 10

## FIG 11

# FIG 12

NEP

IH

$t_1^S$ nLIF

$t_2^S$ nLIF

$t_3^S$ nLIF

IN

IH

INP

# FIG 13

ON  ON  ON

IH

IN

IH

PN

PN

PN

MN

$t_1^S$ nLIF

$t_2^S$ nLIF

$t_3^S$ nLIF

NEP

# FIG 14

# FIG 15

T

| subject (entity) | predicate (relation) | object (entity) |
|---|---|---|
| #sensor | #measures | #data2 |
| #sensor | #measures | #data1 |
| #data1 | #hasDataType | #REAL |
| #app | #reads | #data1 |
| #app | #hasType | #software |
| #app | #runsOn | #edgePC |
| #edgePC | #hasIP | #10.0.0.2 |
| #10.0.0.2 | #hasType | #IPAddress |
| | | |
| #app | #reads | #data2 ? |
| #data2 | #hasDataType | #REAL ? |

UT

FIG 16

FIG 17

FIG 18

# FIG 19

# FIG 20

# FIG 21

SpikE

TransE

## FIG 22

END

AA

**OPC UA**

NE

KG

## FIG 23

M

PLC

TP

#volt_1 — E1

E2

E3

E4

#reads

#app_1 — #runsOn → #edgePC_1

FIG 24

EP 4 030 351 A1

Europäisches
Patentamt

European
Patent Office

Office européen
des brevets

# EUROPEAN SEARCH REPORT

Application Number

EP 21 15 2148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIE CHENG ET AL: "Multilayer Internet-of-Things Middleware Based on Knowledge Graph", IEEE INTERNET OF THINGS JOURNAL, IEEE, USA, vol. 8, no. 4, 26 August 2020 (2020-08-26), pages 2635-2648, XP011835958, DOI: 10.1109/JIOT.2020.3019707 [retrieved on 2021-02-04] * abstract; figures 1, 4-11; tables I, II, III * * page 2635, column 1, line 1 - page 2637, column 1, line 22 * * page 2638, column 2, line 1 - page 2640, column 2, line 23 * * page 2641, column 1, line 1 - page 2644, column 1, line 4 * ----- | 1-25 | INV. G06N3/04 G06N3/063 G06N3/08 G06N5/00 G06N5/02 |
| A | RINGSQUANDL MARTIN ET AL: "Event-Enhanced Learning for KG Completion", 3 June 2018 (2018-06-03), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 541 - 5, XP047474088, ISBN: 978-3-642-17318-9 [retrieved on 2018-06-03] * abstract; figures 1, 2, 3 * * page 541, line 1 - page 545, line 23 * * page 550, line 1 - page 551, line 25 * * page 552, line 5 - line 15 * * page 553, line 36 - page 554, line 22 * ----- -/-- | 2,5, 10-17 | TECHNICAL FIELDS SEARCHED (IPC) G06N G05B |

The present search report has been drawn up for all claims

| Place of search | Date of completion of the search | Examiner |
|---|---|---|
| The Hague | 7 July 2021 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 030 351 A1**

EUROPEAN SEARCH REPORT

Application Number

EP 21 15 2148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TAN CLARENCE ET AL: "Spiking Neural Networks: Background, Recent Development and the NeuCube Architecture", NEURAL PROCESSING LETTERS, KLUWER ACADEMIC PUBLISHERS, NORWELL, MA, US, vol. 52, no. 2, 13 August 2020 (2020-08-13), pages 1675-1701, XP037257624, ISSN: 1370-4621, DOI: 10.1007/S11063-020-10322-8 [retrieved on 2020-08-13] * abstract; figures 3-8; table 1 * * page 1678, line 10 - page 1679, line 11 * * page 1681, line 26 - page 1682, line 7 * * page 1684, line 7 - page 1686, line 30 * * page 1687, line 29 - page 1689, line 37 * * page 1693, line 30 - line 39 * | 18-24 | |
| A | EP 3 647 965 A1 (SIEMENS AG [DE]) 6 May 2020 (2020-05-06) * abstract; figures 1-3 * * paragraph [0027] - paragraph [0042] * | 1-25 | TECHNICAL FIELDS SEARCHED (IPC) |
| A | EP 3 173 983 A1 (SIEMENS AG [DE]) 31 May 2017 (2017-05-31) * abstract; figures 2-4 * * paragraph [0025] - paragraph [0041] * | 1-25 | |

The present search report has been drawn up for all claims

| Place of search | Date of completion of the search | Examiner |
|---|---|---|
| The Hague | 7 July 2021 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 21 15 2148

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2021

| Patent document cited in search report | | Publication date | Patent family member(s) | | Publication date |
|---|---|---|---|---|---|
| EP 3647965 | A1 | 06-05-2020 | CN | 112912871 A | 04-06-2021 |
| | | | EP | 3647965 A1 | 06-05-2020 |
| | | | EP | 3847557 A1 | 14-07-2021 |
| | | | WO | 2020089259 A1 | 07-05-2020 |
| EP 3173983 | A1 | 31-05-2017 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NICKEL, M. ; TRESP, V. ; KRIEGEL, H.-P.** A three-way model for collective learning on multi-relational data. *Icml,* 2011, vol. 11, 809-816
- **YANG, B. ; YIH, W.-T. ; HE, X. ; GAO, J. ; DENG, L.** Embedding entities and relations for learning and inference in knowledge bases. *arXiv preprint arXiv:1412.6575,* 2014
- **BORDES, A. et al.** Translating embeddings for modeling multi-relational data. *Advances in neural information processing systems,* 2013, 2787-2795
- **SCHLICHTKRULL, M. ; KIPF, T.N. ; BLOEM, P. ; VAN DEN BERG, R. ; TITOV, I. ; WELLING, M.** Modeling Relational Data with Graph Convolutional Networks. *arXiv preprint arXiv:1703.06103,* 2017
- **HOPFIELD, J. J.** Neural networks and physical systems with emergent collective computational abilities. *Proceedings of the national academy of sciences,* 1982, vol. 79, 2554-2558

- **HINTON, G. E. ; SEJNOWSKI, T. J. et al.** Learning and relearning in Boltzmann machines. *Parallel distributed processing: Explorations in the microstructure of cognition,* 1986, vol. 1, 2
- **MOSTAFA, H.** Supervised learning based on temporal coding in spiking neural networks. *IEEE transactions on neural networks and learning systems,* 2017, vol. 29.7, 3227-3235
- **COMSA, I. M. et al.** Temporal coding in spiking neural networks with alpha synaptic function. *arXiv preprint arXiv:1907.13223,* 2019
- **GÖLTZ, J. et al.** Fast and deep: Energy-efficient neuromorphic learning with first-spike times. *arXiv:1912.11443,* 2020